# EUROPEAN PATENT SPECIFICATION

(11) **EP 4 317 249 B1**
(45) Date of publication and mention of the grant of the patent: **19.08.2026**
(21) Application number: 22774826.6
(22) Date of filing: 18.02.2022
(51) Int. Cl.: C08G 64/06, C08G 64/20, B01J 19/24, C08G 64/30, B01J 3/00

(54) **AROMATIC BRANCHED POLYCARBONATE, METHOD FOR MANUFACTURING SAME, AND AROMATIC BRANCHED POLYCARBONATE MANUFACTURING APPARATUS**
AROMATISCHES VERZWEIGTES POLYCARBONAT, HERSTELLUNGSVERFAHREN DAFÜR UND HERSTELLUNGSVORRICHTUNG FÜR AROMATISCHES VERZWEIGTES POLYCARBONAT
POLYCARBONATE AROMATIQUE RAMIFIÉ, SON PROCÉDÉ DE PRODUCTION, ET DISPOSITIF DE PRODUCTION POUR POLYCARBONATE AROMATIQUE RAMIFIÉ

(30) Priority: 25.03.2021 JP 2021051384
(43) Date of publication of application: 07.02.2024
(73) Proprietor: Asahi Kasei Kabushiki Kaisha, Tokyo 1000006 (JP)
(72) Inventor: SHIGA, Yusuke, Tokyo 100-0006 (JP); NAMBA, Nobutsugu, Tokyo 100-0006 (JP)
(74) Representative: Strehl & Partner mbB
(86) International application number: PCT/JP2022/006752
(87) International publication number: WO 2022/202026

(56) References cited:
- EP-A1- 1 760 108
- EP-A1- 2 592 102
- WO-A1-2005/123805
- WO-A1-2006/067994
- WO-A1-2007/063757
- WO-A1-2012/005250
- WO-A1-2015/141501
- JP-A- 2005 146 254
- JP-A- H09 110 978
- JP-A- H09 110 978

## Description

### Technical Field

The present invention relates to an aromatic branched polycarbonate, a method for manufacturing aromatic branched polycarbonate, and an aromatic branched polycarbonate manufacturing apparatus.

### Background Art

For example, a melting method of performing transesterification reaction of an aromatic dihydroxy compound (e.g., bisphenol A) and diaryl carbonate (e.g., diphenyl carbonate) in a melted state, and performing polymerization while extracting a formed aromatic monohydroxy compound (e.g., phenol) has heretofore been known as a method for manufacturing aromatic polycarbonate from an aromatic dihydroxy compound and diaryl carbonate.

However, the transesterification reaction described above is equilibrium reaction and furthermore, its equilibrium constant is small. Therefore, a problem of this reaction is that polymerization does not progress unless the formed aromatic monohydroxy compound is efficiently extracted from the surface of a melted product. A further problem thereof is that when polymerization progresses to some extent, the viscosity of a polymer rises suddenly and makes it difficult to efficiently extract the formed aromatic monohydroxy compound to the outside of the system; thus, a polymer having a degree of polymerization necessary as a product (n = on the order of 30 to 65) cannot be industrially manufactured.

In light of the problems mentioned above, for example, a method using a screw type polymerization vessel having a vent part (Japanese Patent Publication No. 50-19600 (corresponding to U.K. Patent No. 1007302)), a method using an intermeshing type twin-screw extruder (Japanese Patent Publication No. 52-36159), a method using a thin-film evaporation type reactor, for example, a screw evaporator or a centrifugal thin-film evaporator (Japanese Patent Publication No. 53-5718 (corresponding to U.S. Patent No. 3,888,826)), and a method using a centrifugal thin-film type evaporation apparatus and a horizontal biaxial stirring type polymerization vessel in combination (Japanese Patent Laid-Open No. 02-153923) are known in order to achieve the degree of polymerization necessary as a product.

These methods attempt to solve the problems associated with the degree of polymerization mentioned above by elevating a polymerization temperature and decreasing the melt viscosity of a polymer. Specifically, polymerization is performed while surface renewal is attempted by mechanically stirring a melted prepolymer under high vacuum under a high-temperature condition of approximately 300°C.

On the other hand, the present inventors have developed an industrial manufacturing method using a guide-contact flow-down type polymerization apparatus which polymerizes a melted prepolymer while allowing the melted prepolymer to drop by a self-weight along a guide such as a wire without performing mechanical stirring of the melted prepolymer, and have proposed a technique of solving the problems of the conventional techniques mentioned above (see, for example, Patent Literatures 1 and 2).

Patent Literature 3 discloses a branched polycarbonate produced by transesterification having low fisheyes and excellent hue. The polycarbonate includes branched structure represented by formulas (2), (3) and (4), wherein the ratio of said branched structures to the total amount of substance with branched structure is 0.1-0.6.

### Citation List

### Patent Literature

Patent Literature 1: International Publication No. WO 2005/123805
Patent Literature 2: International Publication No. WO 2006/067994
Patent Literature 3: EP2592102A1

### Summary of Invention

### Technical Problem

However, even the methods disclosed in Patent Literatures 1 and 2 require elevating a polymerization temperature to a high temperature of approximately 280°C for achieving a sufficient degree of polymerization, and unfortunately, are susceptible to improvement from the viewpoint of obtaining high-quality and high-performance aromatic polycarbonate that has high heat stability, is unlikely to be stained, and has favorable hue stability against heat.

Accordingly, an object of the present invention is to provide an aromatic branched polycarbonate that is unlikely to be stained and has favorable hue stability against heat.

### Solution to Problem

The present inventors have conducted diligent studies in light of the problems of the conventional techniques mentioned above and have consequently completed the present invention by finding that the problems mentioned above can be solved by an aromatic branched polycarbonate having a predetermined repeat unit in a main chain and a branched chain, and having one or more kinds of predetermined branched structures in the main chain and the branched chain, wherein a ratio of a total amount of substance of the branched structures to an amount of substance of the predetermined repeat unit is in a predetermined numeric range; and containing one or more kinds of predetermined oligomers, wherein a total mass of the oligomers is in a predetermined numeric range, and a ratio of a total amount of substance of oligomers having a specific structure to a total amount of substance of the oligomers is in a predetermined numeric range.

Specifically, the present invention is as follows.
[1] An aromatic branched polycarbonate that satisfies the following <condition (i)> to <condition (iii)>:
   <condition (i)>
      having a repeat unit represented by the following general formula (1) in a main chain and a branched chain, and
      having one or more kinds of branched structures represented by the following general formulas (2), (3), and (4) in the main chain and the branched chain, wherein
      a ratio of a total amount of substance of the branched structures to an amount of substance of the repeat unit represented by the following general formula (1) is 0.01% by mol to 0.5% by mol or less:

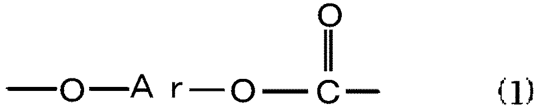

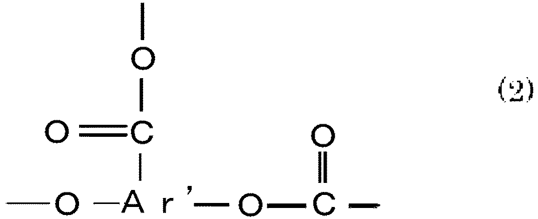

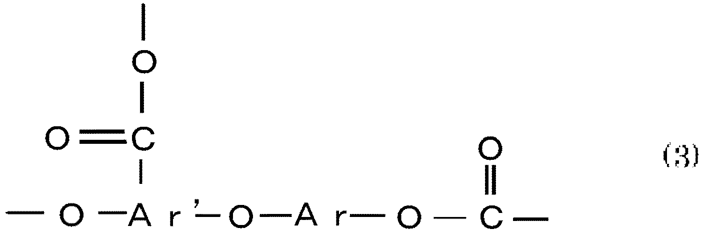

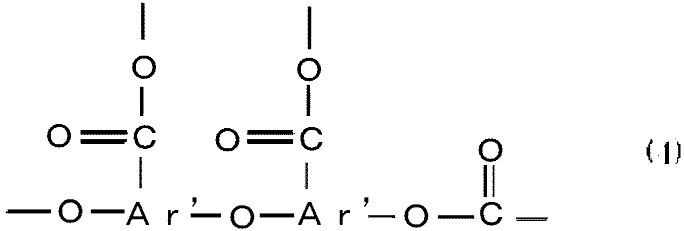

      wherein Ar represents a divalent aromatic group, and Ar' represents a trivalent aromatic group;
   <condition (ii)>
   containing one or more kinds of oligomers represented by the following general formulas (5), (6), and (7), wherein a ratio of a total mass of the oligomers to a mass of the aromatic branched polycarbonate is 0.6% by mass or less:

      H-(O-Ar-O-C(=O)-)₂-OAr" (5)

      H-(O-Ar-O-C(=O)-)₂-O-Ar-OH (6)

      Ar"O-C(=O)-(O-Ar-O-C(=O)-)₂-OAr" (7)

      wherein Ar represents a divalent aromatic group, and Ar" represents an aromatic terminal group; and
   <condition (iii)>
      a ratio of a total amount of substance of the oligomers represented by the general formulas (5) and (6) to a total amount of substance of the oligomers is 60% by mol or less.
[2] The aromatic branched polycarbonate according to [1], wherein
   in the <condition (i)>, the ratio of the total amount of substance of the branched structures to the amount of substance of the repeat unit represented by the general formula (1) is from 0.05% by mol to 0.4% by mol,
   in the <condition (ii)>, the ratio of the total mass of the oligomers to the mass of the aromatic branched polycarbonate is 0.3% by mass or less, and
   in the <condition (iii)>, the ratio of the total amount of substance of the oligomers represented by the general formulas (5) and (6) to the total amount of substance of the oligomers is 30% by mol or less.
[3] The aromatic branched polycarbonate according to [1] or [2], wherein
   MI (melt index) of the aromatic branched polycarbonate measured at a temperature of 300°C under a load of 1.2 kg is from 0.5 to 40 g/10 min.
[4] A method for manufacturing the aromatic branched polycarbonate according to any one of [1] to [3], comprising the steps of:
   supplying a nitrogen-absorbed aromatic branched polycarbonate prepolymer to a guide-contact flow-down type polymerization apparatus constituting an aromatic branched polycarbonate manufacturing apparatus such that a pressure thereof is kept at 15 kPaA to 200 kPaA; and
   allowing the prepolymer to flow down along an external surface of a guide having no heating source in itself to evaporate a low-boiling substance.
[5] The method for manufacturing the aromatic branched polycarbonate according to [4], wherein
   the evaporation of the low-boiling substance is performed using the guide-contact flow-down type polymerization apparatus, and
   the guide-contact flow-down type polymerization apparatus satisfies the following <condition (1)> to <condition (9)>:
      <condition (1)>
         having: a liquid feed port; a liquid supply zone for supplying a liquid to a guide of an evaporation zone through a porous plate; the evaporation zone provided with a plurality of guides extending downward from the porous plate in a space surrounded by the porous plate, a side casing, and a bottom casing; a vacuum vent disposed in the evaporation zone; and a liquid discharge port disposed in a lowermost part of the bottom casing;
      <condition (2)>
         a flow path control component having a function by which a liquid to be supplied from the liquid feed port to the porous plate flows in a direction from a peripheral part of the porous plate toward a central part in the liquid supply zone is placed in the liquid supply zone;
      <condition (3)>
         internal cross-sectional area A (m²) on a horizontal plane of the side casing of the evaporation zone satisfies the following formula (I): $0.7 \leq A \leq 300$
      <condition (4)>
         a ratio between the internal cross-sectional area A (m²) and internal cross-sectional area B (m²) on a horizontal plane of the liquid discharge port satisfies the following formula (II): $20 \leq A / B \leq 1000$
      <condition (5)>
         the bottom casing constituting the bottom of the evaporation zone is connected to the upper side casing at an angle of C degrees (°) with respect to the inside thereof, wherein the angle of C degrees satisfies the following formula (III): $110 \leq C \leq 165$
      <condition (6)>
         length h (cm) of the guide satisfies the formula (IV) : $150 \leq h \leq 5000$
      <condition (7)>
         total external surface area S (m²) of all the plurality of guides satisfies the formula (V): $2 \leq S \leq 50000$
      <condition (8)>
         average number N of pores per m² of the porous plate (number/m²) satisfies the formula (VI): $50 \leq N \leq 3000$ and
      <condition (9)>
         a ratio between upper area T (m²) of the porous plate including upper areas of the pores of the porous plate and total effective cross-sectional area Q (m²) of the pores satisfies the following formula (VII): $50 \leq T / Q \leq 3000$
[6] The method for manufacturing the aromatic branched polycarbonate according to [4] or [5], wherein the amount of the liquid subjected to evaporation treatment is 1 or more ton per hour.
[7] The method for manufacturing the aromatic branched polycarbonate according to [5] or [6], wherein
   angle E degrees (°) formed by an internal sidewall face of the liquid supply zone and the porous plate satisfies the following formula (VIII): $100 \leq E < 180$
[8] The method for manufacturing the aromatic branched polycarbonate according to any one of [5] to [7], wherein
   distance K (cm) between the guide closest to an internal wall face of the side casing of the evaporation zone and the internal wall face satisfies the following formula (IX): $5 \leq K \leq 50$
[9] The method for manufacturing the aromatic branched polycarbonate according to any one of [5] to [8], wherein
   the side casing of the evaporation zone is in a cylindrical shape with internal diameter D (cm) and length L (cm), the bottom casing connected to an underpart of the side casing is in a cone shape, and the liquid discharge port at the lowermost part of the bottom casing in a cone shape is in a cylindrical shape with internal diameter d (cm), wherein
   D, L, and d satisfy the following formulas (X), (XI), (XII), and (XIII): $100 \leq D \leq 1800$ $5 \leq D / d \leq 50$ $0.5 \leq L / D \leq 30$ $h - 20 \leq L \leq h + 300$
   wherein in the formula (XIII), h (cm) represents the length of the guide.
[10] The method for manufacturing the aromatic branched polycarbonate according to any one of [5] to [9], wherein
   space volume V (m³) where a liquid can exist in the liquid supply zone from the liquid feed port to an upper face of the porous plate, and upper area T (m²) of the porous plate including upper areas of the pores of the porous plate satisfy the following formula (XIV): $0.02 \left(m\right) \leq V / T \leq 0.5 \left(m\right)$
[11] The method for manufacturing the aromatic branched polycarbonate according to any one of [5] to [10], wherein
   at least one of the guides is in a columnar form with external diameter r (cm), or in a pipe form that inhibits a liquid and/or a gaseous substance from entering the inside, wherein
   the external diameter r satisfies the following formula (XV): $0.1 \leq r \leq 1$
[12] The method for manufacturing the aromatic branched polycarbonate according to any one of [5] to [11], wherein
   the guide-contact flow-down type polymerization apparatus has the plurality of guides, and
   the plurality of guides are joined through a supporting material.
[13] The method for manufacturing the aromatic branched polycarbonate according to any one of [5] to [12], wherein
   the plurality of guides are selected from the group consisting of
   grid-like or net-like guides in which the individual guides are fixed through a transverse supporting material, steric guides in which a plurality of grid-like or net-like guides are anteroposteriorly arranged and fixed through a transverse supporting material, and jungle gym-like steric guides in which a plurality of individual guides are anteroposteriorly and laterally fixed through a transverse supporting material.
[14] The method for manufacturing the aromatic branched polycarbonate according to any one of [5] to [13], wherein
   the guide-contact flow-down type polymerization apparatus is further connected with at least one guide-contact flow-down type polymerization apparatus that satisfies the <condition (1)> to <condition (9)>, wherein
   the two or more guide-contact flow-down type polymerization apparatuses are connected in series, in parallel, or both in series and in parallel.
[15] The method for manufacturing the aromatic branched polycarbonate according to [14], wherein
   the guide-contact flow-down type polymerization apparatus is further connected with one guide-contact flow-down type polymerization apparatus, wherein
   total external surface area S1 (m²) of the guides of the guide-contact flow-down type polymerization apparatus, and
   total external surface area S2 (m²) of the guides of the further connected guide-contact flow-down type polymerization apparatus
   satisfy the following formula (XVI): $1 \leq S 1 / S 2 \leq 20$
[16] The method for manufacturing the aromatic branched polycarbonate according to any one of [5] to [15], wherein
   an inert gas absorption apparatus for allowing an inert gas to be absorbed to a melted aromatic branched polycarbonate prepolymer before supply to the guide-contact flow-down type polymerization apparatus is placed, wherein
   the inert gas-absorbed melted prepolymer is supplied to the guide-contact flow-down type polymerization apparatus such that a pressure thereof within a melted prepolymer supply piping from the inert gas absorption apparatus to the guide-contact flow-down type polymerization apparatus is kept at 15 kPaA to 200 kPaA by a pressure regulating valve placed immediately before the entrance of the guide-contact flow-down type polymerization apparatus.
[17] The method for manufacturing the aromatic branched polycarbonate according to [15] or [16], wherein
   a guide-contact flow-down type polymerization apparatus further connected with the guide-contact flow-down type polymerization apparatus is placed, and
   an inert gas absorption apparatus for allowing an inert gas to be absorbed to a melted aromatic branched polycarbonate prepolymer before supply to each of the guide-contact flow-down type polymerization apparatuses is placed, wherein
   the inert gas-absorbed melted prepolymer is supplied such that a pressure thereof within a melted prepolymer supply piping from the inert gas absorption apparatus to each of the guide-contact flow-down type polymerization apparatuses is kept at 15 kPaA to 200 kPaA by a pressure regulating valve placed immediately before the entrance of each of the guide-contact flow-down type polymerization apparatuses.
[18] An aromatic branched polycarbonate manufacturing apparatus comprising
   a guide-contact flow-down type polymerization apparatus that allows an aromatic branched polycarbonate prepolymer to flow down along an external surface of a guide having no heating source in itself, while evaporating a low-boiling substance, and
   an inert gas absorption apparatus for allowing an inert gas to be absorbed to a melted aromatic branched polycarbonate prepolymer before supply to the guide-contact flow-down type polymerization apparatus, wherein
   the guide-contact flow-down type polymerization apparatus
   satisfies the following <condition (1)> to <condition (9)>, and has a pressure regulating valve controlling a pressure of the inert gas-absorbed melted prepolymer to 15 kPaA to 200 kPaA within a melted prepolymer supply piping from the inert gas absorption apparatus to the guide-contact flow-down type polymerization apparatus:
      <condition (1)>
         having: a liquid feed port; a liquid supply zone for supplying a liquid to a guide of an evaporation zone through a porous plate; the evaporation zone provided with a plurality of guides extending downward from the porous plate in a space surrounded by the porous plate, a side casing, and a bottom casing; a vacuum vent disposed in the evaporation zone; and a liquid discharge port disposed in a lowermost part of the bottom casing;
      <condition (2)>
         a flow path control component having a function by which a liquid to be supplied from the liquid feed port to the porous plate flows in a direction from a peripheral part of the porous plate toward a central part in the liquid supply zone is placed in the liquid supply zone;
      <condition (3)>
         internal cross-sectional area A (m²) on a horizontal plane of the side casing of the evaporation zone satisfies the following formula (I): $0.7 \leq A \leq 300$
      <condition (4)>
         a ratio between the internal cross-sectional area A (m²) and internal cross-sectional area B (m²) on a horizontal plane of the liquid discharge port satisfies the following formula (II): $20 \leq A / B \leq 1000$
      <condition (5)>
         the bottom casing constituting the bottom of the evaporation zone is connected to the upper side casing at an angle of C degrees (°) with respect to the inside thereof, wherein the angle of C degrees satisfies the following formula (III): $110 \leq C \leq 165$
      <condition (6)>
         length h (cm) of the guide satisfies the following formula (IV): $150 \leq h \leq 5000$
      <condition (7)>
         total external surface area S (m²) of all the plurality of guides satisfies the following formula (V): $2 \leq S \leq 50000$
      <condition (8)>
         average number N of pores per m² of the porous plate (number/m²) satisfies the following formula (VI): $50 \leq N \leq 3000$ and
      <condition (9)>
         a ratio between upper area T (m²) of the porous plate including upper areas of the pores of the porous plate and total effective cross-sectional area Q (m²) of the pores satisfies the following formula (VII): $50 \leq T / Q \leq 3000$

### Advantageous Effect of Invention

The present invention can provide an aromatic branched polycarbonate that is unlikely to be stained and has favorable hue stability against heat.

### Brief Description of Drawings

[Figure 1] Figure 1 shows a schematic configuration diagram of an inert gas absorption apparatus constituting an aromatic branched polycarbonate manufacturing apparatus.
[Figure 2] Figure 2 shows a schematic configuration diagram of a guide-contact flow-down type polymerization apparatus constituting an aromatic branched polycarbonate manufacturing apparatus.
[Figure 3] Figure 3 shows a schematic configuration diagram of upper parts of an inert gas absorption apparatus and a guide-contact flow-down type polymerization apparatus.
[Figure 4] Figure 4 shows an enlarged schematic configuration diagram of upper parts of an inert gas absorption apparatus and a guide-contact flow-down type polymerization apparatus.
[Figure 5] Figure 5 shows a schematic configuration diagram of one example of the aromatic branched polycarbonate manufacturing apparatus of the present embodiment.

### Description of Embodiments

Hereinafter, the mode for carrying out the present invention (hereinafter, also referred to as the "present embodiment") will be described in detail.

The present invention is not limited by the present embodiment and can be carried out through various changes or modifications without departing from the the present invention.

### [Aromatic branched polycarbonate]

The aromatic branched polycarbonate of the present embodiment is an aromatic branched polycarbonate that satisfies <condition (i)> to <condition (iii)> given below.

The aromatic branched polycarbonate of the present embodiment is manufactured by a transesterification method.

### <Condition (i)>

Having a repeat unit represented by the following general formula (1) in a main chain and a branched chain, and

Having one or more kinds of branched structures represented by the following general formulas (2), (3), and (4) in the main chain and the branched chain, wherein
a ratio of a total amount of substance of the branched structures to an amount of substance of the repeat unit represented by the following general formula (1) is from 0.01% by mol to 0.5% by mol or less: 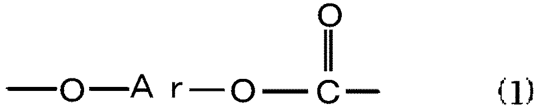 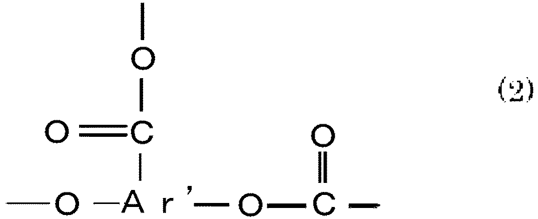 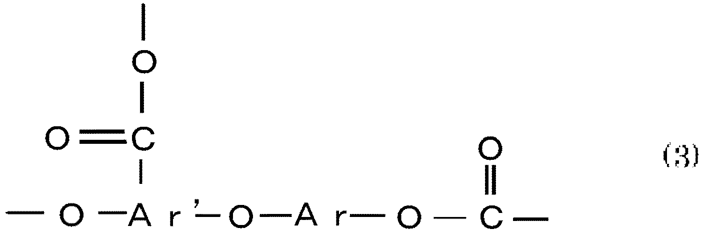 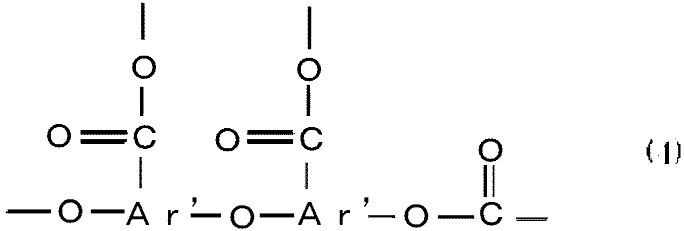 wherein Ar represents a divalent aromatic group, and Ar' represents a trivalent aromatic group.

The trivalent aromatic group is, for example, a group in which one hydrogen atom in the divalent aromatic group mentioned above is a bond.

### <Condition (ii)>

Containing one or more kinds of oligomers represented by the following general formulas (5), (6), and (7), wherein a ratio of a total mass of the oligomers to a mass of the aromatic branched polycarbonate is 0.6% by mass or less:

H-(O-Ar-O-C(=O)-)₂-OAr" (5)

H-(O-Ar-O-C(=O)-)₂-O-Ar-OH (6)

Ar"O-C(=O)-(O-Ar-O-C(=O)-)₂-OAr" (7)

wherein Ar represents a divalent aromatic group, and Ar'' represents an aromatic terminal group.

### <Condition (iii)>

A ratio of a total amount of substance of the oligomers represented by the general formulas (5) and (6) to a total amount of substance of the oligomers is 60% by mol or less.

The present embodiment can provide an aromatic branched polycarbonate that is unlikely to be stained and has favorable hue stability against heat.

The ratio of the total amount of substance of the branched structures represented by the general formulas (2), (3), and (4) to the amount of substance of the repeat unit represented by the general formula (1) is from 0.01% by mol to 0.5% by mol, preferably from 0.05% by mol to 0.4% by mol, more preferably from 0.1% by mol to 0.3% by mol, further preferably from 0.2% by mol to 0.25% by mol, from the viewpoint of maintaining the impact strength of the aromatic branched polycarbonate of the present embodiment.

The ratio of the total amount of substance of the branched structures represented by the general formulas (2), (3), and (4) to the amount of substance of the repeat unit represented by the general formula (1) can be measured by LC (liquid chromatography) and specifically, can be measured by a method described in Examples mentioned later.

The ratio of the total amount of substance of the branched structures represented by the general formulas (2), (3), and (4) to the amount of substance of the repeat unit represented by the general formula (1) can be controlled to the numeric range described above by adjusting polymerization conditions.

The purity of the aromatic branched polycarbonate of the present embodiment having a repeat unit represented by the general formula (1) in a main chain and a branched chain, and having one or more kinds of branched structures represented by the general formulas (2), (3), and (4) in the main chain and the branched chain is preferably 80% by mass or more, preferably 90% by mass or more, preferably 95% by mass or more, more preferably 98% by mass or more.

As mentioned above, the aromatic branched polycarbonate of the present embodiment contains one or more kinds of oligomers represented by the following general formulas (5), (6), and (7), wherein a ratio of a total mass of the following oligomers to a mass of the aromatic branched polycarbonate is 0.6% by mass or less:

H-(O-Ar-O-C(=O)-)₂-OAr" (5)

H-(O-Ar-O-C(=O)-)₂-O-Ar-OH (6)

Ar"O-C(=O)-(O-Ar-O-C(=O)-)₂-OAr" (7)

wherein Ar represents a divalent aromatic group, and Ar" represents an aromatic terminal group.

Examples of the aromatic terminal group include monovalent aromatic groups having 5 to 20 carbon atoms.

The ratio of the total mass of the oligomers to the mass of the aromatic branched polycarbonate is 0.6% by mass or less, whereby hue stability against heat is excellent. The ratio is preferably 0.5% by mass or less, more preferably 0.4% by mass or less, further preferably 0.3% by mass or less. The ratio is preferably 0.01% by mass or more, more preferably 0.05% by mass or more, further preferably 0.1% by mass or more.

The ratio of the total mass of the oligomers represented by the general formulas (5), (6), and (7) can be measured by GPC (gel permeation chromatography) and specifically, can be measured by a method described in Examples mentioned later.

The ratio of the total mass of the oligomers represented by the general formulas (5), (6), and (7) can be controlled to the numeric range described above by performing polymerization in a guide-contact flow-down type polymerization apparatus mentioned below, allowing nitrogen to be absorbed to a prepolymer to be supplied to the apparatus, and supplying the prepolymer such that a pressure thereof is kept at a predetermined pressure mentioned later.

As mentioned above, the ratio of the total amount of substance of the oligomers represented by the general formulas (5) and (6) to the total amount of substance of the oligomers represented by the general formulas (5), (6), and (7) is 60% by mol or less.

The ratio of the total amount of substance of the oligomers represented by the general formulas (5) and (6) to the total amount of substance of the oligomers represented by the general formulas (5) to (7) falls within the range described above, whereby aromatic branched polycarbonate that is unlikely to be stained and has favorable hue stability against heat is obtained.

The ratio is preferably 50% by mol or less, more preferably 30% by mol or less. The lower limit value of the ratio is not particularly limited and can be 10% by mol or more.

The ratio of the total amount of substance of the oligomers represented by the general formulas (5) and (6) to the total mass of the oligomers represented by the general formulas (5), (6), and (7) can be measured by GPC (gel permeation chromatography) and specifically, can be measured by a method described in Examples mentioned later.

The ratio of the total amount of substance of the oligomers represented by the general formulas (5) and (6) to the total amount of substance of the oligomers represented by the general formulas (5), (6), and (7) can be controlled to the numeric range described above by performing polymerization in a guide-contact flow-down type polymerization apparatus mentioned below, allowing nitrogen to be absorbed to a prepolymer to be supplied to the apparatus, and supplying the prepolymer such that a pressure thereof is kept at a predetermined pressure mentioned later.

In the above formulas, Ar represents a divalent aromatic group.

The divalent aromatic group Ar is preferably represented by, for example, the following formula:

-Ar¹-Y-Ar²-

wherein Ar¹ and Ar² each independently represent a divalent carbocyclic or heterocyclic aromatic group having 5 to 70 carbon atoms, and Y represents a divalent alkane group having 1 to 30 carbon atoms.

One or more hydrogen atoms in the divalent aromatic group Ar¹ or Ar² may be replaced with other substituents that do not adversely affect the reaction, for example, a halogen atom, an alkyl group having 1 to 10 carbon atoms, an alkoxy group having 1 to 10 carbon atoms, a phenyl group, a phenoxy group, a vinyl group, a cyano group, an ester group, an amide group, or a nitro group. Examples of the heterocyclic aromatic group include aromatic groups having one or more ring-forming nitrogen atoms, oxygen atoms, or sulfur atoms.

Examples of the divalent aromatic group Ar¹ or Ar² include groups such as substituted or unsubstituted phenylene, substituted or unsubstituted biphenylene, and substituted or unsubstituted pyridylene. In this context, the substituent is as mentioned above.

The divalent alkane group Y is, for example, an organic group represented by any of the following formulas: 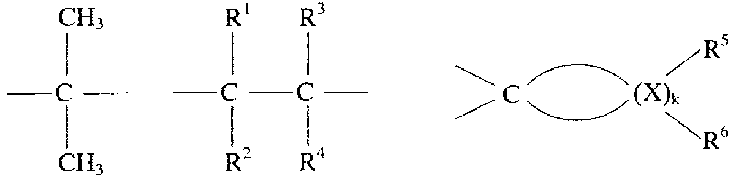 wherein R¹, R², R³, and R⁴ each independently represent hydrogen, an alkyl group having 1 to 10 carbon atoms, an alkoxy group having 1 to 10 carbon atoms, a cycloalkyl group having 5 to 10 ring-constituting carbon atoms, a carbocyclic aromatic group having 5 to 10 ring-constituting carbon atoms, or a carbocyclic aralkyl group having 6 to 10 carbon atoms,
k represents an integer of 3 to 11, R⁵ and R⁶ are individually selected as to each X and each independently represent hydrogen or an alkyl group having 1 to 6 carbon atoms, X represents carbon, and
one or more hydrogen atoms in R¹, R², R³, R⁴, R⁵, or R⁶ may be replaced with other substituents, for example, a halogen atom, an alkyl group having 1 to 10 carbon atoms, an alkoxy group having 1 to 10 carbon atoms, a phenyl group, a phenoxy group, a vinyl group, a cyano group, an ester group, an amide group, or a nitro group, without adversely affecting the reaction.

Examples of such a divalent aromatic group Ar include those represented by the following formulas: 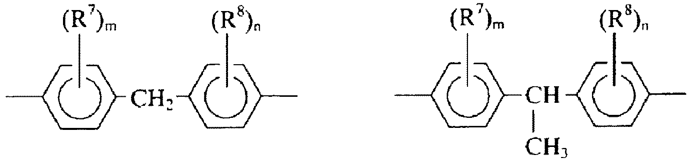 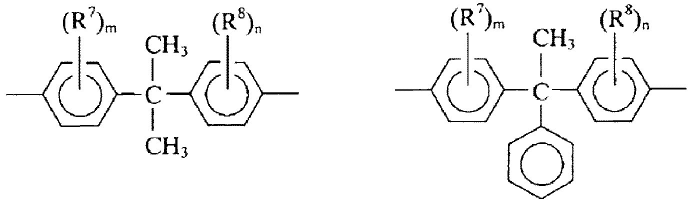 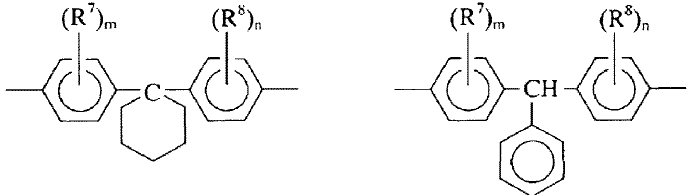 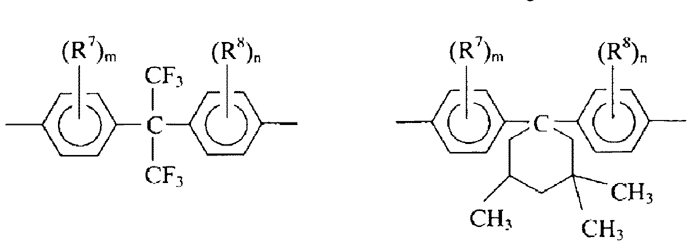 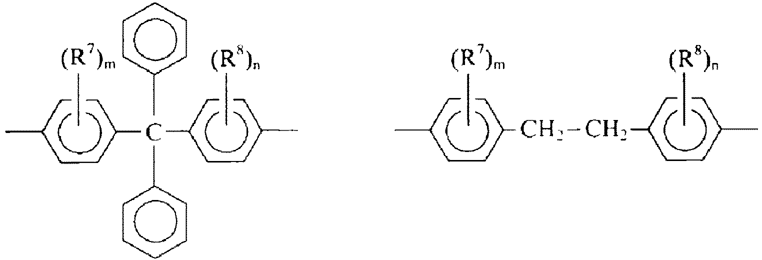 wherein R⁷ and R⁸ are each independently hydrogen atom, a halogen atom, an alkyl group having 1 to 10 carbon atoms, an alkoxy group having 1 to 10 carbon atoms, a cycloalkyl group having 5 to 10 ring-constituting carbon atoms, or a phenyl group, each of m and n is an integer of 1 to 4, when m is 2 to 4, the R⁷ moieties may be the same as or different from each other, and when n is 2 to 4, the R⁸ moieties may be the same as or different from each other.

The divalent aromatic group Ar may be represented by the following formula:

-Ar¹-Z-Ar²-

wherein Ar¹ and Ar² are as mentioned above, Z represents a single bond or a divalent group such as -O-, -CO-, -S-, -SO₂-, -SO-, -COO-, or -CON(R¹)-, and R¹ is as mentioned above.

Examples of such a divalent aromatic group Ar include those represented by the following formulas: 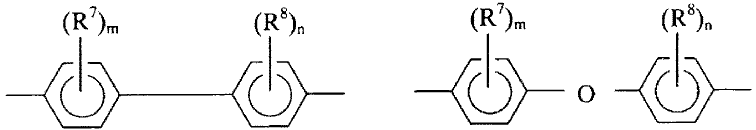 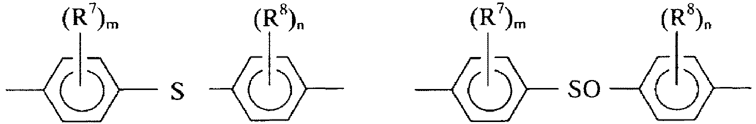 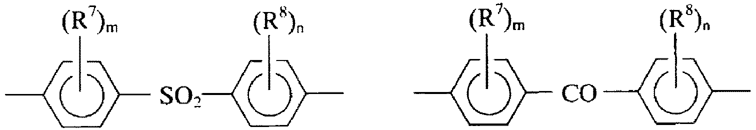 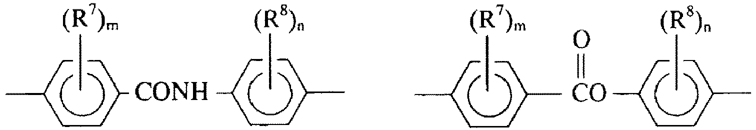 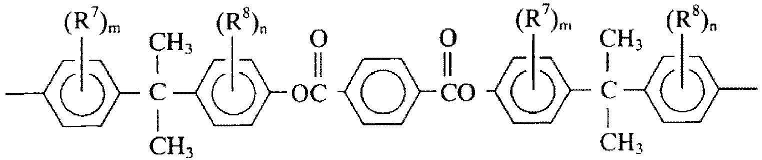 wherein R⁷, R⁸, m, and n are as mentioned above.

Specific examples of the divalent aromatic group Ar include a substituted or unsubstituted phenylene group, a substituted or unsubstituted naphthylene group, and a substituted or unsubstituted pyridylene group.

In the formulas (2) to (4), Ar' represents a trivalent aromatic group. The trivalent aromatic group is, for example, a group in which one hydrogen atom in the divalent aromatic group mentioned above is a bond.

In the formulas (5) to (7), Ar" represents a monovalent carbocyclic or heterocyclic aromatic terminal group. Preferred examples of the aromatic terminal group include monovalent aromatic groups having 5 to 20 carbon atoms.

In the formulas (5) to (7), Ar" represents a monovalent carbocyclic or heterocyclic aromatic group as described above, and one or more hydrogen atoms in this Ar" may be replaced with other substituents that do not adversely affect the reaction, for example, a halogen atom, an alkyl group having 1 to 10 carbon atoms, an alkoxy group having 1 to 10 carbon atoms, a phenyl group, a phenoxy group, a vinyl group, a cyano group, an ester group, an amide group, or a nitro group. The Ar" moieties may be the same or different. Examples of the monovalent aromatic group Ar" include a phenyl group, a naphthyl group, a biphenyl group, and a pyridyl group. These groups may each be substituted by one or more substituents mentioned above.

Preferred examples of each Ar" include those represented by the following formulas:

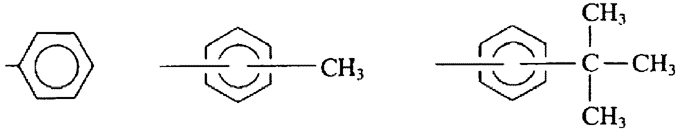

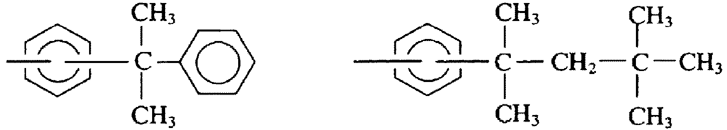

Diaryl carbonate is used as a raw material for manufacturing the aromatic branched polycarbonate of the present embodiment. Examples of such diaryl carbonate include substituted or unsubstituted diphenyl carbonates represented by the following formula:

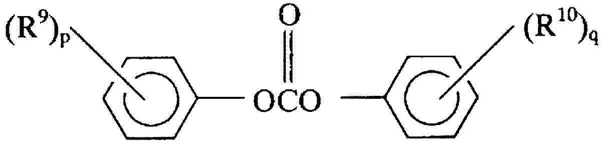

wherein R⁹ and R¹⁰ each independently represent a hydrogen atom, an alkyl group having 1 to 10 carbon atoms, an alkoxy group having 1 to 10 carbon atoms, a cycloalkyl group having 5 to 10 ring-constituting carbon atoms, or a phenyl group, each of p and q is an integer of 1 to 5, when p is 2 or larger, the R⁹ moieties may be different from each other, and when q is 2 or larger, the R¹⁰ moieties may be different from each other.

MI (melt index) of the aromatic branched polycarbonate of the present embodiment measured at a temperature of 300°C under a load of 1.2 kg is preferably from 0.5 to 40 g/10 min from the viewpoint of moldability. MI is more preferably from 0.5 to 20 g/10 min, further preferably from 1 to 15 g/10 min, still more preferably from 2 to 12 g/10 min. When MI is the range of 0.5 to 20 g/10 min, moldability and drawdown characteristics are further improved. MI can be measured by a method described in Examples mentioned later.

The aromatic branched polycarbonate of the present embodiment preferably contains few impurities and is preferably aromatic polycarbonate containing from 0.001 to 1 ppm of an alkali metal and/or an alkaline earth metal in terms of a metal element thereof. The content is preferably from 0.005 to 0.5 ppm, more preferably from 0.01 to 0.1 ppm.

When the content of such a metal element is 1 ppm or less, preferably 0.5 ppm or less, more preferably 0.1 ppm, the physical properties of the aromatic branched polycarbonate as a product are not influenced. The content mentioned above of the alkali metal and/or the alkaline earth metal can be achieved by manufacturing using the aromatic branched polycarbonate manufacturing apparatus according to the present embodiment mentioned later. The content mentioned above of the alkali metal and/or the alkaline earth metal can be measured by IPC (inductively coupled plasma) analysis.

The halogen content of the aromatic branched polycarbonate of the present embodiment is preferably 10 ppb or less, more preferably 5 ppb or less, further preferably 1 ppb or less. The halogen content can be achieved by manufacturing using the aromatic branched polycarbonate manufacturing apparatus according to the present embodiment with a raw material mentioned later. The halogen content can be measured by IPC (inductively coupled plasma) analysis.

### [Method for manufacturing aromatic branched polycarbonate]

The method for manufacturing the aromatic branched polycarbonate of the present embodiment comprises the steps of:
supplying a nitrogen-absorbed aromatic branched polycarbonate prepolymer to a guide-contact flow-down type polymerization apparatus constituting an aromatic branched polycarbonate manufacturing apparatus such that a pressure thereof is kept at 15 kPaA to 200 kPaA; and
allowing the prepolymer to flow down along an external surface of a guide having no heating source in itself to evaporate a low-boiling substance.

The pressure of the prepolymer is in the range of 15 kPaA to 200 kPaA, whereby aromatic branched polycarbonate that satisfies <condition (ii)> and <condition (iii)> mentioned above is easily obtained. Polymerization using the guide-contact flow-down type polymerization apparatus can decrease melt flow index (MI), can further reduce variation in MI from the start of manufacturing, and can keep standard deviation of MI low.

The low-boiling substance has a lower boiling point than that of the aromatic branched polycarbonate of interest and is produced as a by-product during a manufacturing process.

The pressure of the prepolymer is preferably in the range of 15 kPaA to 200 kPaA, more preferably 20 kPaA to 150 kPaA, further preferably 20 to 100 kPaA, from the viewpoint of obtaining aromatic branched polycarbonate that satisfies <condition (ii)> and <condition (iii)> mentioned above.

In the aromatic branched polycarbonate manufacturing apparatus of the present embodiment mentioned later, it is preferred for keeping the pressure of an inert gas-absorbed melted prepolymer at a predetermined pressure within a piping from an inert gas absorption apparatus to the guide-contact flow-down type polymerization apparatus that a predetermined pressure regulating valve should be placed immediately before the entrance of the guide-contact flow-down type polymerization apparatus.

The inside of the guide-contact flow-down type polymerization apparatus has relatively high vacuum, and the prepolymer at or near a liquid feed port to the guide-contact flow-down type polymerization apparatus tends to become a low-pressure state by aspiration into the guide-contact flow-down type polymerization apparatus. Hence, an inert gas absorbed in the inert gas absorption apparatus may be separated from the prepolymer and aggregated. Accordingly, for preventing the separation and aggregation of such an inert gas, specifically, the pressure of the prepolymer is preferably in the numeric range described above.

Specifically, in a piping from a gear pump beneath the inert gas absorption apparatus to the guide-contact flow-down type polymerization apparatus, a relatively high pressure (from ordinary pressure to 15 kPa or higher) is maintained up to near or at a region immediately before the guide-contact flow-down type polymerization apparatus due to pressure loss of the piping, for example. Accordingly, the pressure is preferably kept at 15 kPa or higher only immediately before entry to the guide-contact flow-down type polymerization apparatus.

If the prepolymer is supplied to the guide-contact flow-down type polymerization apparatus such that the pressure of the prepolymer immediately before the entrance of the guide-contact flow-down type polymerization apparatus is a pressure lower than 15 kPa, the pressure of the prepolymer within the upper part of a porous plate is unstable so that the inert gas (e.g., nitrogen) temporarily absorbed to the prepolymer is separated or aggregated, resulting in unstable homogeneity of the prepolymer. This inhibits a uniform and continuous foaming phenomenon of the prepolymer within the guide-contact flow-down type polymerization apparatus. Thus, a stable product cannot be manufactured, or reduction in color, fisheye, or foreign matter such as a gel might occur easily.

Hence, a pressure regulating valve is placed and used to adjust the pressure of the prepolymer to 15 kPa or higher.

On the other hand, if the pressure of the prepolymer exceeds 200 kPaA, no effect is changed. Thus, a higher pressure is not practical because such a pressure places an excessive burden on a discharge gear pump or a piping of the inert gas absorption apparatus and requires improving pressure resistance.

Accordingly, the pressure at which the prepolymer is supplied to the guide-contact flow-down type polymerization apparatus is preferably in the numeric range mentioned above.

### [Manufacturing apparatus for use in method for manufacturing aromatic branched polycarbonate]

A specific configuration of the aromatic branched polycarbonate manufacturing apparatus of the present embodiment for use in the method for manufacturing the aromatic branched polycarbonate of the present embodiment will be described below with reference to the drawings.

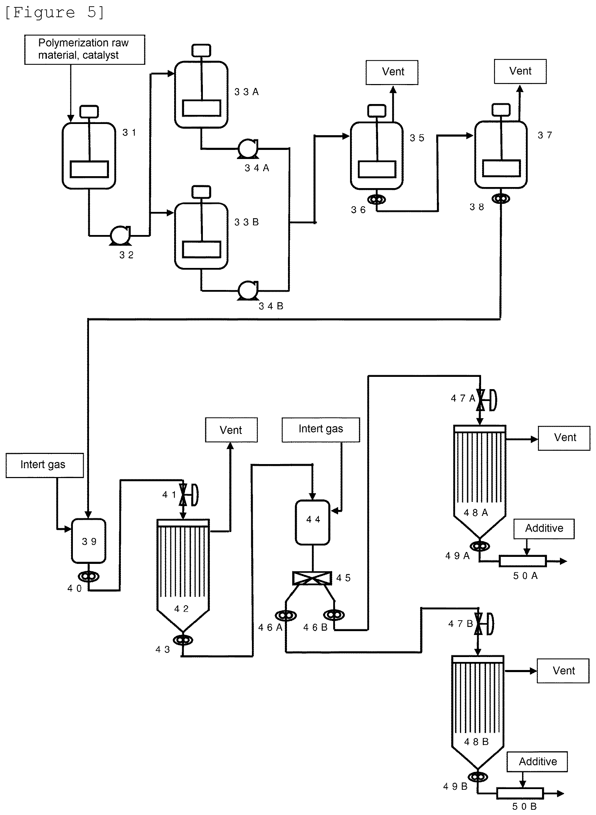

Figure 5 shows a schematic configuration diagram of one example of the aromatic branched polycarbonate manufacturing apparatus of the present embodiment.

In the aromatic branched polycarbonate manufacturing apparatus, polymerization raw materials and a catalyst are added to mixing tank 31 and mixed, subsequently transferred to dissolved mixture reservoirs 33A and 33B through transfer pump 32, and further transferred therefrom through transfer pumps 34A and 34B to first polymerization vessel 35 where prepolymerization is performed.

Prepolymerization is further performed in second polymerization vessel 37 via gear pump 36 for discharge to obtain an aromatic branched polycarbonate prepolymer.

The aromatic branched polycarbonate prepolymer is transferred to first inert gas absorption apparatus 39 via supply pump 38, and after adjustment of the solubility of an inert gas by pressure regulating valve 41, further transferred via supply pump 40 to first guide-contact flow-down type polymerization apparatus 42 where the prepolymer is polymerized. Here, a low-molecular-weight component phenol which is a low-boiling substance is discharged from a vent.

Next, the resultant is transferred to second inert gas absorption apparatus 44 via supply pump 43, further allowed to diverge by three-way polymer valve 45, and transferred therefrom using supply pumps 46A and 46B. The solubility of an inert gas is adjusted by pressure regulating valves 47A and 47B, and the resultant is transferred to second guide-contact flow-down type polymerization apparatuses 48A and 48B connected thereto where the prepolymer is polymerized. Here, phenol is discharged from a vent.

The resultant is further transferred through supply pumps 49A and 49B, and an additive is added to post-stage devices 50A and 50B to obtain the aromatic branched polycarbonate of interest.

The pressure regulating valves 41, 47A, and 47B which adjust the solubility of an inert gas are not limited by their forms. The pressure regulating valves may be valves disposed in predetermined pipings or may be other devices capable of controlling a predetermined pressure.

In the method for manufacturing the aromatic branched polycarbonate of the present embodiment, the evaporation of the low-boiling substance is performed using a guide-contact flow-down type polymerization apparatus, and the guide-contact flow-down type polymerization apparatus satisfies <condition (1)> to <condition (9)> mentioned later.

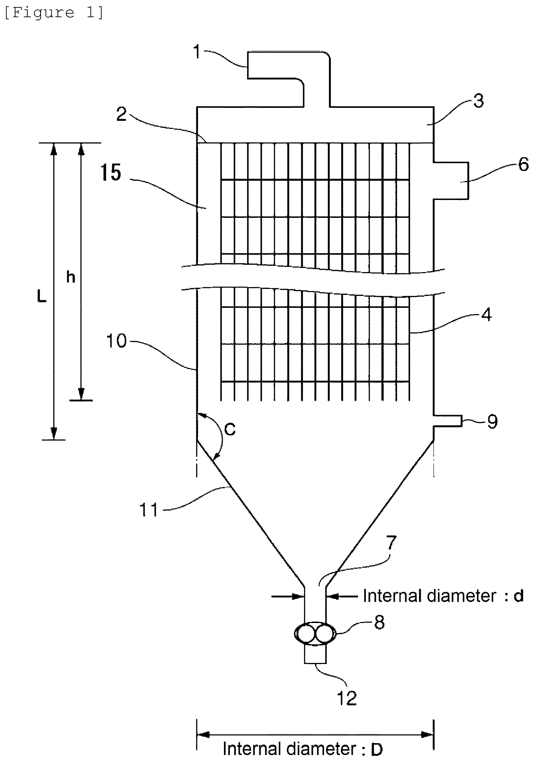

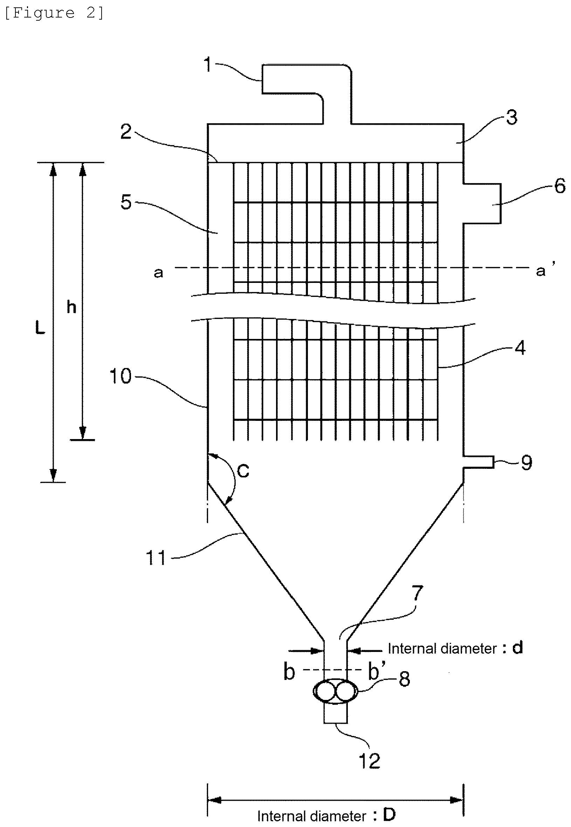

Figure 1 shows a schematic configuration diagram of the inert gas absorption apparatuses 39 and 44, and Figure 2 shows a schematic configuration diagram of the guide-contact flow-down type polymerization apparatuses 42, 48A, and 48B.

Each inert gas absorption apparatus and each guide-contact flow-down type apparatus differ in that their internal spaces have inert gas absorption zone which performs the absorption of an inert gas and evaporation zone which performs the evaporation of a low-boiling substance, respectively, though having a basic apparatus structure in common.

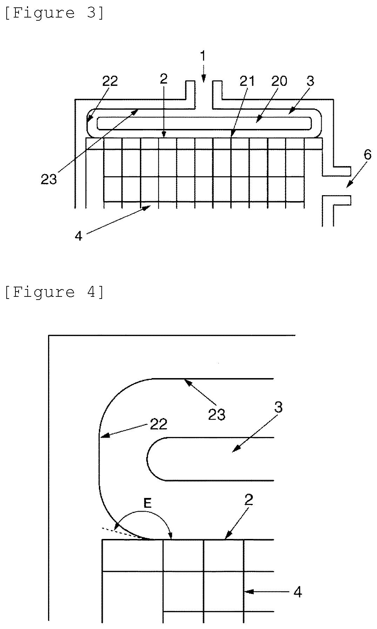

Figures 3 and 4 each shown a schematic diagram of upper parts of the inert gas absorption apparatus and the guide-contact type flow-down polymerization apparatus.

For the aromatic branched polycarbonate manufacturing apparatus of the present embodiment, it is preferred that the guide-contact flow-down type polymerization apparatus should satisfy the following <condition (1)> to <condition (9)>.

### <Condition (1)>

Having liquid feed port 1, liquid supply zone 3 for supplying a liquid to guide 4 of evaporation zone 5 through porous plate 2, the evaporation zone 5 provided with a plurality of guides 4 extending downward from the porous plate 2 in a space surrounded by the porous plate **2,** side casing 10, and bottom casing 11, vacuum vent 6 disposed in the evaporation zone 5, and liquid discharge port 7 disposed in a lowermost part of the bottom casing.

### <Condition (2)>

Flow path control component 20 having a function by which a liquid to be supplied from the liquid feed port 1 to the porous plate 2 flows in a direction from a peripheral part of the porous plate 2 toward a central part in the liquid supply zone 3 is placed in the liquid supply zone 3.

### <Condition (3)>

Internal cross-sectional area A (m²) on a horizontal plane (in Figure **2****,** a plane taken along the a-a' line) of the side casing 10 of the evaporation zone 5 satisfies the following formula (I): $0.7 \leq A \leq 300$

### <Condition (4)>

A ratio between the internal cross-sectional area A (m²) and internal cross-sectional area B (m²) on a horizontal plane (in Figure 2, a b-b' plane) of the liquid discharge port 7 satisfies the following formula (II) : $20 \leq A / B \leq 1000$

The formula (II) is satisfied, whereby a melted product of an evaporatively concentrated liquid or polymer or a manufactured polymer can be discharged with an elevated melt viscosity without reducing the quality of the liquid or the polymer.

### <Condition (5)>

It is preferred that the bottom casing 11 constituting the bottom of the evaporation zone 5 should be connected to the upper side casing 10 at an angle of C degrees in Figure 2 with respect to the inside thereof, wherein the angle of C degrees (°) satisfies the following formula (III): $110 \leq C \leq 165$

For reducing the cost of equipment, C as close as possible to 90 degrees is preferred. Since a melted product of a concentrated liquid or polymer is moved with an elevated melt viscosity to the discharge port 7 without reducing the quality of the concentrated liquid or the polymer dropping from the lower end of the guide 4, it is preferred that C should satisfy the formula (III).

### <Condition (6)>

Length h (cm) of the guide 4 satisfies the following formula (IV): $150 \leq h \leq 5000$

The length h of the guide 4 is 150 cm or more, whereby concentration and polymerization can progress at a practically sufficient rate and quality. h is 5000 cm or less, whereby difference in liquid viscosity between an upper part and a lower part of the guide 4 is not too large, and variation in degree of concentration and variation in degree of polymerization can be prevented.

### <Condition (7)>

Total external surface area S (m²) of the plurality of guides 4 satisfies the following formula (V): $2 \leq S \leq 50000$

S (m²) is 2 or more, whereby an amount of a liquid subjected to evaporation treatment and a yield of a manufactured polymer which are 1 ton or more per hour can be achieved.

S (m²) is 50000 or less, whereby the cost of equipment is reduced while this yield is achieved, and variation in physical properties can be eliminated.

### <Condition (8)>

Average number N of pores per m² of the porous plate (number/m²) satisfies the following formula (VI): $50 \leq N \leq 3000$

The average number N of pores (number/m²) of the porous plate is a numeric value obtained by dividing the total number of pores by area (including upper areas of the pores) T (m²) of an upper face of the porous plate 2.

It is preferred that the pores of the porous plate 2 should be almost uniformly arranged in the porous plate 2. Distance K (cm) between a marginal part of the porous plate 2 and an internal wall face of the evaporation zone 5 is usually preferably longer than a distance between adjacent pores. Therefore, the number of pores per unit area at the marginal part is preferably smaller than that at the central part. In the present embodiment, average number N of pores is used in this context. The range of N is more preferably 70 ≤ N ≤ 2000, further preferably 100 ≤ N ≤ 1000.

### <Condition (9)>

A ratio between upper area T (m²) of the porous plate including upper areas of the pores of the porous plate and total effective cross-sectional area Q (m²) of the pores satisfies the following formula (VII): $50 \leq T / Q \leq 3000$

T/Q described above is more preferably from 100 to 2500, further preferably from 250 to 1500.

The "effective cross-sectional area" of a pore of the porous plate refers to the area of the narrowest part at the cross section of the pore through which a liquid passes. When the guide 4 penetrates this pore, the area is obtained by subtracting the cross-sectional area of the guide 4 from the cross-sectional area of the pore.

Q (m²) represents the total effective cross-sectional area of the pores.

The formulas (VI) and (VII) are important for continuously and stably performing the evaporation treatment of a large amount of a liquid, particularly, a highly viscous liquid, for a long period.

The aromatic branched polycarbonate manufacturing apparatus of the present embodiment that satisfies the configuration mentioned above not only solves the problems of conventionally known evaporation apparatuses but can stably manufacture a high-quality and high-performance concentrated liquid or polymer with no stain, i.e., a liquid subjected to evaporation treatment, in an amount of 1 or more ton per hour for a long period of several thousands of hours or longer, for example, 5,000 hours or longer.

The aromatic polycarbonate manufacturing apparatus of the present embodiment has such excellent effects because combined effects brought about by the conditions combined appear, in addition to various reasons mentioned above.

For example, guides having a high surface area that satisfy the formulas (IV) and (V) are very effective for efficient internal stirring and surface renewal of a large amount of a liquid, a prepolymer, or a polymer supplied at a relatively low temperature, can efficiently perform the evaporation of a low-boiling substance, and are useful in obtaining an amount as large as 1 or more ton per hour of a high-quality concentrated liquid or polymer. In addition, angle C that satisfies the formula (III) can shorten a time required for a large amount of a high-quality concentrated liquid or polymer dropping from the guides 4 to be discharged from the liquid discharge port 7, and can reduce a heat history.

The performance of the guide-contact flow-down type polymerization apparatus at an industrial scale can be established for the first time by operation for a long time using large-scale manufacturing equipment. In this respect, the cost of manufacturing equipment is an important factor to be taken into consideration.

The guide-contact flow-down type polymerization apparatus constituting the aromatic polycarbonate manufacturing apparatus of the present embodiment can reduce the cost of equipment against performance as compared with conventional evaporation apparatuses or polymerization vessels.

Specific conditions or ranges required for a dimension, an angle, and the like in the guide-contact flow-down type polymerization apparatus of the present embodiment are as described above and are further preferably the following ranges.

The range of the internal cross-sectional area A (m²) on a horizontal plane of the side casing 10 of the evaporation zone 5 shown in the formula (I) is more preferably 0.8 ≤ A ≤ 250, further preferably 1 ≤ A ≤ 200.

The range of the ratio between the internal cross-sectional area A (m²) and the internal cross-sectional area B (m²) on a horizontal plane of the liquid discharge port 7 shown in the formula (II) is more preferably 25 ≤ A/B ≤ 900, further preferably 30 ≤ A/B ≤ 800.

The range of the angle of C degrees (°) formed by the bottom casing 11 constituting the bottom of the evaporation zone 5 with respect to the inside of the upper side casing 10, shown in the formula (III) is more preferably 120 ≤ C ≤ 165, further preferably 135 ≤ C ≤ 165. In the case of sequentially elevating the degree of concentration or the degree of polymerization using a plurality of guides-contact flow-down type polymerization apparatuses, C1 ≤ C2 ≤ C3 ≤ ... is preferred when their corresponding angles are defined as C1, C2, C3, ...

Necessary length h (cm) of the guide 4 shown in the formula (IV) differs depending on difference in factors such as the amount, viscosity, and temperature of a liquid to be treated, the amount and boiling point of a low-boiling substance, the pressure and temperature of the evaporation zone, and a necessary degree of concentration or degree of polymerization, and the range thereof is more preferably 200 ≤ h ≤ 3000, further preferably 400 < h ≤ 2500.

Necessary total external surface area S (m²) of all the guides shown in the formula (V) also differs depending on difference in the same factors as above, and the range thereof is more preferably 10 ≤ S ≤ 40000, further preferably 15 ≤ S ≤ 30000.

In the present specification, the total external surface area of all the guides means the entire surface area of guides with which a liquid flows down in contact, and in the case of, for example, guides made of pipes, means external surface areas and excludes the surface areas of internal faces of the pipes where no liquid flows down.

As shown in Figures 1 to 3, the liquid feed port 1 is preferably disposed at an upper part of the liquid supply zone 3.

The liquid feed port 1 may be located at one site or a plurality of sites. It is preferred that the liquid feed port 1 should be arranged such that a liquid is supplied as uniformly as possible to the porous plate 2 in the liquid supply zone 3. In the case of one site, the liquid supply zone 3 is preferably disposed at an upper central part.

Flow path control component 20 having a function by which a liquid to be supplied from the liquid feed port 1 to the porous plate 2 flows mainly in a direction from a peripheral part of the porous plate 2 toward a central part in the liquid supply zone 3 is preferably placed in the liquid supply zone 3. The flow path control component 20 thus placed is effective for directing the flow of a liquid from the peripheral part of the porous plate 2 toward the central part and thereby preventing the liquid from residing for a long period in a space between a pore part (e.g., 21) of the porous plate 2 and internal sidewall face 22 of the liquid supply zone. The liquid allowed to flow from the peripheral part of the porous plate 2 toward the central part is typically supplied from pores of the porous plate 2 present therebetween to the guides 4.

The flow path control component 20 may have any shape as long as its effects can be exerted. The transverse-sectional outline thereof is preferably similar to the transverse-sectional outline of the porous plate 2. In this context, the transverse section of the flow path control component 20 refers to a location that exhibits the largest area when the flow path control component 20 is cut at its face in a lateral direction.

The interval between the flow path control component 20 and the internal sidewall face 22 of the liquid supply zone 3 differs in preferred range depending on the amount, viscosity, etc. of a liquid to be treated. When the viscosity of a liquid to be handled is relatively high in the guide-contact flow-down type polymerization apparatus or the inert gas absorption apparatus constituting the aromatic branched polycarbonate manufacturing apparatus of the present embodiment, the range is usually preferably from 1 cm to 50 cm, more preferably from 2 cm to 30 cm, further preferably from 3 cm to 20 cm.

As shown in Figures 3 and 4, there is a predetermined interval between upper internal wall face 23 of the liquid supply zone 3 and the flow path control component 20, and this interval can be appropriately selected and preferably minimizes a liquid residence time within the liquid supply zone 3. In this context, this interval is preferably from 1 cm to 200 cm, more preferably from 2 cm to 170 cm, further preferably from 3 cm to 150 cm.

As for the interval between the upper internal wall face 23 of the liquid supply zone 3 and the flow path control component 20, the flow path control component 20 may attain almost the same interval from the liquid feed port 1 to the internal sidewall face 22 of the liquid supply zone 3, or the flow path control component 20 may attain the interval that is gradually narrowed or gradually widened.

The interval between the flow path control component 20 and the porous plate 2 is usually from 1 cm to 50 cm, preferably from 2 cm to 30 cm, more preferably from 3 cm to 20 cm.

The interval between the porous plate 2 and the flow path control component 20 may be almost the same interval from the internal sidewall face 22 of the liquid supply zone 3 to the central part of the porous plate 2, or the interval may be gradually narrowed or gradually widened. Flow path control component 20 that attains almost the same interval or the interval that is gradually narrowed is preferred.

The flow path control component 20 hinders the directing of a liquid supplied from the liquid feed port 1 directly to the pores of the porous plate 2 and therefore functions as a certain kind of baffle. When the porous plate 2 has a wide area, it is preferred that a portion of the supplied liquid should make a shortcut to near the central part of the porous plate 2 without passing through the peripheral part of the porous plate 2. For this reason, in a preferred form, one or more pores are disposed near a central part of the flow path control component 20 or at other appropriate parts.

For creating no "dead space" in the liquid supply zone 3, it is further preferred that an angle formed by the internal sidewall face 22 of the liquid supply zone and the porous plate 2, i.e., E degrees (°) in Figure 4, should satisfy the following formula (VIII): $100 \leq E < 180$

In this context, when the internal sidewall face 22 of the liquid supply zone 3 is planar, an angle formed by the internal sidewall face 22 and the porous plate 2 on a cut plane on a face that is perpendicular to the plane and perpendicular to an upper face of the porous plate 2 is defined as E (°).

When the internal sidewall face 22 is a concave curved face, an angle formed by a tangent and an upper face of the porous plate 2 at a point where a curve on a cut plane on a face that is perpendicular to the concave face and perpendicular to the upper face of the porous plate 2 starts to rise is defined as E (°).

The range of E (°) is more preferably 120 ≤ E ≤ 180, further preferably 145 ≤ E < 180.

It is also preferred to device a way to create no "dead space" near a junction between the upper internal wall face 23 and the internal sidewall face 22 of the liquid supply zone 3. When an angle formed by both the faces is larger than 90° or is 90° or close thereto, it is preferred to prepare a face near the junction into a concave face such that no liquid resides therein.

In the aromatic branched polycarbonate manufacturing apparatus of the present embodiment, it is preferred that distance K (cm) between the guide 4 closest to an internal wall face of the side casing 10 of the evaporation zone 5 and the internal wall face should satisfy the following formula (IX): $5 \leq K \leq 50$

When a liquid is attached to an internal wall face of the side casing 10 of the evaporation zone 5, evaporative concentration occurs on the internal wall face so that the concentrated liquid flows down on the internal wall face. However, in this internal wall, the liquid attached to the internal wall face is more highly concentrated than a liquid that flows down on the guide 4 and usually has an elevated viscosity, because an external wall face is usually heated with a water vapor or a heat medium using a jacket or the like or heated with an electric heater or the like for the heat retention and/or heating of the evaporation zone 5. Such a liquid having an elevated viscosity flows down on a wall face for a longer time (residence time) and further has a higher viscosity.

In addition, heat denaturation also occurs easily due to constant heating from the external wall face. This tendency is very high, particularly, when a highly viscous liquid such as a prepolymer or a polymer is handled for use in a polymerization vessel or a polymer purification and/or recovery apparatus. In such a case, a polymer, etc. attached to the internal wall face of the evaporation zone 5 tends to be stained, increased in molecular weight, or gelled, and contamination by such a denatured product is not preferred for the polymer as a product. Thus, longer distance K (cm) between the guide 4 closest to the internal wall face and the internal wall face is preferred. In the case of an industrial apparatus, shorter distance K is preferred from the viewpoint of manufacturing cost or from the viewpoint of obtaining high evaporation power in an apparatus as small as possible.

A feature of the aromatic branched polycarbonate manufacturing apparatus of the present embodiment is the found range of K (cm) as short as possible (the formula (IX)) without adversely affecting a product.

The range of K (cm) is more preferably 10 ≤ K ≤ 40, still more preferably 12 ≤ K ≤ 30.

In the aromatic branched polycarbonate manufacturing apparatus of the present embodiment, the internal cross-sectional shape on a horizontal plane of the side casing 10 of the evaporation zone 5 in the guide-contact flow-down type polymerization apparatus may be any shape such as a polygonal, oval, or round shape.

The evaporation zone 5 is usually operated under reduced pressure and may therefore be any zone that resists such operation, and a round shape or a shape similar thereto is preferred. Thus, the side casing 10 of the evaporation zone 5 is preferably in a cylindrical shape. In this case, it is preferred that bottom casing 11 in a cone shape should be placed on an underpart of the side casing 10 in a cylindrical shape, and liquid discharge port 7 in a cylindrical shape should be disposed on a lowermost part of the bottom casing 11.

In the guide-contact flow-down type polymerization apparatus of the aromatic branched polycarbonate manufacturing apparatus of the present embodiment, the side casing 10 and the bottom casing 11 of the evaporation zone 5 may be in a cylindrical shape and in a cone shape, respectively, as described above, and the liquid discharge port 7 of a concentrated liquid or polymer may be in a cylindrical shape. In such a case, when an internal diameter of the cylindrical shape of the side casing 10 is defined as D (cm), the length thereof is defined as L (cm), and an internal diameter of the liquid discharge port 7 is defined as d (cm), it is preferred that D, L, and d should satisfy the following formulas (X), (XI), (XII), and (XIII): $100 \leq D \leq 1800$ $5 \leq D / d \leq 50$ $0.5 \leq L / D \leq 30$ $h - 20 \leq L \leq h + 300$ wherein h (cm) represents the length of the guide 4 shown in the <condition (6)>.

In the guide-contact flow-down type polymerization apparatus, the range of D (cm) is more preferably 150 ≤ D ≤ 1500, further preferably 200 ≤ D ≤ 1200.

The range of D/d is more preferably 6 ≤ D/d ≤ 45, further preferably 7 ≤ D/d ≤ 40.

The range of L/D is more preferably 0.6 ≤ L/D ≤ 25, further preferably 0.7 ≤ L/D ≤ 20.

The range of L (cm) is more preferably h - 10 ≤ L ≤ h + 250, further preferably, h ≤ L ≤ h + 200.

For D, d, and L, it is preferred that balance between the amount of a prepolymer that can be attached to the guides 4 and the internal diameter D (cm) of the cylindrical shape of the side casing 10 and balance of the amplitude of the internal diameter d (cm) of the liquid discharge port 7 should fall within the ranges described above.

The number of guides and the internal diameter D (cm) of the cylindrical shape of the side casing 10 depend on the amount of a prepolymer supplied. For extracting a polymer that has dropped (which has a higher viscosity than that of the supplied prepolymer because polymerization progresses), the internal diameter of the liquid discharge port 7, i.e., the piping diameter (d), appropriate for the viscosity is necessary.

On the other hand, liquids or melted products are continuously supplied to the guides 4 from above. Therefore, the relationships of the formulas mentioned above are satisfied, whereby liquids having almost the same viscosity or melted products with a higher degree of polymerization having almost the same melt viscosity continuously drop to the bottom casing 11 from the lower ends of the guides 4. Specifically, liquids having almost the same viscosity or polymers having almost the same degree of polymerization which have been formed while flowing down on the guides 4 accumulate in a lower part of the bottom casing 11 so that concentrated liquids having no variation in degree of evaporation or polymers having no variation in molecular weight are continuously manufactured. This is one of other excellent features of the guide-contact flow-down type polymerization apparatus constituting the aromatic branched polycarbonate manufacturing apparatus of the present embodiment.

The concentrated liquids or the polymers accumulating in the lower part of the bottom casing 11 are continuously extracted by discharge pump 8 through the liquid discharge port 7, and the polymers are usually continuously pelletized through an extruder or the like. In this case, an additive or the like may be added to the extruder.

In the aromatic branched polycarbonate manufacturing apparatus of the present embodiment, it is preferred that space volume V (m³) where a liquid can exist in the liquid supply zone 3 from the liquid feed port 1 (junction between the liquid feed port 1 and an upper internal wall of the liquid supply zone 3) to an upper face of the porous plate 2, and upper area T (m²) of the porous plate 2 including upper areas of the pores should satisfy the following formula (XIV): $0.02 \left(m\right) \leq V / T \leq 0.5 \left(m\right)$

The space volume V (m³) is a substantial liquid volume in the liquid supply zone 3 during continuous operation of the guide-contact flow-down type polymerization apparatus and excludes the volume of the flow path control component 20.

The amount of a liquid retained in the liquid supply zone 3 is V (m³). A smaller amount of this V reduces a residence time in the liquid supply zone 3 and is free from an adverse effect ascribable to heat denaturation. When the amount of a liquid subjected to evaporation treatment is 1 ton/hr or more and for stably obtaining a concentrated liquid and/or polymer having a predetermined degree of concentration or degree of polymerization for a long period, it is preferred to supply a liquid as evenly as possible to the pores of the porous plate 2. For this reason, the value of V/T is preferably in the range of the formula (XIV). The range of the value of V/T is more preferably 0.05 (m) ≤ V/T ≤ 0.4 (m), further preferably 0.1 (m) ≤ V/T ≤ 0.3 (m).

In the guide-contact flow-down type polymerization apparatus of the aromatic branched polycarbonate manufacturing apparatus of the present embodiment, it is preferred that the space volume V (m³) where a liquid can exist in the liquid supply zone 3, and space volume Y (m³) of the evaporation zone 5 should satisfy the following formula: $10 \leq Y / V \leq 500 .$

For stably and efficiently performing the evaporation treatment of a large amount of a liquid per unit time for a long time without causing reduction in physical properties by heat denaturation, the value of Y/V is preferably in this range. The range of the value of Y/V is more preferably 15 ≤ Y/V ≤ 400, further preferably 20 ≤ Y/V ≤ 300.

The space volume Y (m³) of the evaporation zone 5 is a space volume from a lower face of the porous plate 2 to the liquid discharge port 7 and includes volumes occupied by the guides 4.

In the guide-contact flow-down type polymerization apparatus constituting the aromatic branched polycarbonate manufacturing apparatus of the present embodiment, when one guide 4 is in a columnar form with external diameter r (cm), or in a pipe form that inhibits a liquid and/or a gaseous substance, or a melted prepolymer from entering the inside, it is preferred that the external diameter r (cm) should satisfy the following formula (XV): $0.1 \leq r \leq 1$

The guides 4 allow evaporative concentration or polymerization reaction to progress while a liquid or a melted prepolymer flows down thereon. The guides 4 also have a function of retaining the liquid or the melted prepolymer for a certain time. This retention time is related to an evaporation time or a polymerization reaction time. The liquid viscosity or the melt viscosity thereof is elevated with the progression of evaporation or polymerization. Therefore, the retention time and the amount of the liquid or the melted prepolymer retained are increased. The amount of the liquid or the melted prepolymer retained by each guide 4 differs depending on the external surface area of the guide 4, i.e., the external diameter thereof in the case of a columnar form or a pipe form, even if the melt viscosity is the same.

The guides 4 placed in the guide-contact flow-down type polymerization apparatus need to be strong enough to support the masses of the guides 4 themselves as well as the mass of the retained liquid, melted prepolymer, or polymer. In this context, the thicknesses of the guides 4 are important. In the case of a columnar form or a pipe form, it is preferred to satisfy the formula (XV).

When the external diameter r (cm) of the guide 4 is 0.1 or more, stable operation for a long time is possible in terms of strength. r (cm) is 1 or less, whereby the guides themselves can be prevented from becoming very heavy, and inconvenience such as the thickness of the porous plate 2 that must be very large for retaining the guides in the guide-contact flow-down type polymerization apparatus, for example, can be circumvented. Besides, the number of parts having too large an amount of a liquid, a melted prepolymer, or a polymer retained can be prevented from being increased, and inconvenience such as large variation in degree of concentration or in molecular weight can be circumvented.

In this context, the range of the external diameter r (cm) of the guide 4 is more preferably 0.15 ≤ r ≤ 0.8, further preferably 0.2 ≤ r ≤ 0.6.

The positional relationship between the guides 4 and the porous plate 2 and the positional relationship between the guides 4 and the pores of the porous plate 2 are not particularly limited as long as a liquid, a raw material-melted prepolymer, or a polymer flows down in contact with the guides.

The guides 4 and the porous plate 2 may be in contact with each other or may be in no contact with each other.

It is preferred that the guides 4 should be placed so as to correspond to the pores of the porous plate 2, though the positional relationship is not limited thereto. This is because design can be made such that a liquid, a raw material-melted prepolymer, or a polymer dropping from the porous plate 2 comes into contact with the guides 4 at appropriate positions.

Preferred examples of the form in which the guides 4 are placed so as to correspond to the pores of the porous plate 2 include (1) a way in which the upper ends of the guides 4 are fixed to an underpart or the like of the flow path control component 20 so that the guides 4 are disposed in a state where the guides 4 penetrate central parts or their neighborhoods of the pores of the porous plate 2, (2) a way in which the upper ends of the guides 4 are fixed to marginal parts at upper ends of the pores of the porous plate 2 so that the guides 4 are disposed in a state where the guides 4 penetrate the pores of the porous plate 2, and (3) a way in which upper ends of the guides 4 are fixed to a lower face of the porous plate 2 so that the guides 4 are disposed in a state where the guides 4 do not penetrate the pores of the porous plate 2.

Example of the method for allowing a liquid, a raw material-melted prepolymer, or a polymer to flow down along the guides 4 through the porous plate 2 include a method of allowing the liquid, the raw material-melted prepolymer, or the polymer to flow down by a liquid head or a self-weight, and a method of extruding the liquid, the raw material-melted prepolymer, or the polymer from the porous plate 2 by pressurization using a pump or the like. The method is preferably a method of supplying a predetermined amount of the liquid, the raw material-melted prepolymer, or the polymer to the liquid supply zone 3 under pressurization using a supply pump so that the liquid, the raw material-melted prepolymer, or the polymer directed to the guides 4 through the porous plate 2 flow down along the guides 4 by a self-weight.

In the aromatic branched polycarbonate manufacturing apparatus of the present embodiment, a preferred material of such guides 4 can be selected from among, for example, stainless steel, carbon steel, metals such as Hastelloy, nickel, titanium, chromium, aluminum, and other alloys, and a highly heat-resistant polymer material. Stainless steel is particularly preferred.

The surfaces of the guides 4 may be variously treated, if necessary, by, for example, plating, lining, passivation treatment, acid washing, washing with a solvent, phenol, or the like.

The aromatic branched polycarbonate manufacturing apparatus of the present embodiment can stably (in the case of polymer manufacturing, without variation in molecular weight, etc.) manufacture a high-quality and high-performance concentrated liquid or polymer that is unlikely to be stained, has favorable hue, and is excellent in mechanical physical properties for a long period at an industrial scale at a fast evaporation rate or a fast polymerization rate, probably for the following reasons.

Specifically, in the guide-contact flow-down type polymerization apparatus constituting the aromatic branched polycarbonate manufacturing apparatus of the present embodiment, a raw material liquid is directed from the liquid feed port 1 via the liquid supply zone 3 and the porous plate 2 to the guides 4 and concentrated while flowing down along the guides 4, or the degree of polymerization is elevated during this flow-down. In this case, a liquid or a melted prepolymer is subjected to effective internal stirring and surface renewal while flowing down along the guides 4, and a low-boiling substance is effectively extracted. Therefore, concentration or polymerization progresses at a fast rate. Since the viscosity thereof is elevated with the progression of concentration or polymerization, tack strength to the guides 4 is increased, and the amount of a liquid or a melted product adhering to the guides 4 is increased downhill along the guides 4. This means that the residence time on the guides, i.e., the evaporation time or the polymerization reaction time, of the liquid or the melted prepolymer is increased. Furthermore, the liquid or the melted prepolymer flowing down by a self-weight while supported by the guides 4 has a very large surface area per weight, and its surface renewal is efficiently performed. This can readily achieve increase in molecular weight in the latter half of evaporative concentration or polymerization in a highly viscous region, which is absolutely impossible for conventionally known evaporation apparatuses or mechanical stirring type polymerization vessels. This is one of the excellent features of the aromatic branched polycarbonate manufacturing apparatus of the present embodiment.

In the guide-contact flow-down type polymerization apparatus constituting the aromatic branched polycarbonate manufacturing apparatus of the present embodiment, the amounts of liquids or melted products adhering to the guides 4 are increased in the latter half of evaporation or polymerization. Because of a mere tack retaining power appropriate for the viscosity thereof, almost the same amount of liquids or melted products having almost the same viscosity are supported by the respective guides 4 at the same height of the plurality of guides 4. On the other hand, since liquids or melted products are continuously supplied to the guides 4 from above, liquids having almost the same viscosity or melted products with a higher degree of polymerization having almost the same melt viscosity continuously drop to the bottom casing 11 from the lower ends of the guides 4. Specifically, liquids having almost the same viscosity or polymers having almost the same degree of polymerization which have been formed while flowing down on the guides 4 accumulate in a lower part of the bottom casing 11 so that concentrated liquids having no variation in degree of evaporation or polymers having no variation in molecular weight are continuously manufactured. This is one of the excellent features of the aromatic branched polycarbonate manufacturing apparatus of the present embodiment. The concentrated liquids or the polymers accumulating in the lower part of the bottom casing 11 are continuously extracted by discharge pump 8 through the liquid discharge port 7, and the polymers are usually continuously pelletized through an extruder or the like. In this case, an additive or the like may be added to the extruder.

The porous plate 2 constituting the guide-contact flow-down type polymerization apparatus is usually selected from a flat plate, a corrugated plate, a plate having a thick central part, and the like. The transverse-sectional shape of the porous plate 2 is usually selected from shapes such as round, elongated, triangular, and polygonal shapes.

The transverse sections of the pores of the porous plate are usually selected from shapes such as round, elongated, triangular, slit, polygonal, and star shapes.

The cross-sectional area of each pore is in the range of usually from 0.01 to 100 cm², preferably from 0.05 to 10 cm², more preferably from 0.1 to 5 cm². The interval between the pores is usually from 1 to 500 mm, preferably from 10 to 100 mm, in terms of the distance between the centers of the pores. The pores of the porous plate 2 may be through-holes of the porous plate 2 or may be non-penetrating pores of the porous plate 2 in a state the guides 4 are mounted thereto. The pores may be in a tapered shape in the depth direction.

In the guide-contact flow-down type polymerization apparatus, it is preferred for the porous plate 2 and its pores that the formula (VI) and the formula (VII) should be satisfied, as mentioned above.

The guides 4 constituting the guide-contact flow-down type polymerization apparatus have no heating source (e.g., heat medium or electric heater) inside the guides themselves and are preferably constituted by a material having a very large ratio of a cross-sectional length in the perpendicular direction to an average cross-sectional outer perimeter in the horizontal direction. The ratio of (cross-sectional length in the perpendicular direction / average cross-sectional outer perimeter in the horizontal direction) is usually in the range of 10 to 1,000,000, preferably in the range of 50 to 100,000.

The cross-sectional shapes in the horizontal direction of the guides 4 are usually selected from shapes such as round, elongated, triangular, rectangular, polygonal, and star shapes. The cross-sectional shapes of the guides 4 may be the same or different in the length direction. The guides 4 may be in a hollow shape. Since the guides 4 constituting the aromatic branched polycarbonate manufacturing apparatus of the present embodiment have no heating source in themselves, a large feature thereof is no fear of heat denaturation of a liquid on the surfaces of the guides 4.

The guides 4 may each be made of a single substance such as wire, a thin rod, or a thin pipe that inhibits a liquid or a melted prepolymer from entering the inside, or may be made of a combination of a plurality of substances by a method such as intertwining. Alternatively, net-like guides or punching plate-like guides may be used.

The guides 4 may have a smooth surface or surface asperities, or their surfaces may partially have a protrusion or the like. The guides 4 are preferably in a columnar form such as wire or thin rod form, in the thin pipe form described above, net-like guides, or punching plate-like guides.

In the guide-contact flow-down type polymerization apparatus constituting the aromatic polycarbonate manufacturing apparatus of the present embodiment capable of manufacturing a high-quality concentrated liquid or polymer at an industrial scale (yield, long-term stable manufacturing, etc.), the guides are particularly preferably of type in which a plurality of respective guides 4 in a wire or thin rod form or in the thin pipe form are joined at appropriate vertical intervals using a transverse supporting material from upper to lower parts of the guides 4.

Examples thereof include: grid-like or net-like guides in which a plurality of guides 4 in a wire or thin rod form or in the thin pipe form are fixed at appropriate vertical intervals, for example, 1-cm to 200-cm intervals, using a transverse supporting material from upper to lower parts of the guides 4; steric guides in which a plurality of grid-like or net-like guides are anteroposteriorly arranged and joined at appropriate vertical intervals, for example, 1-cm to 200-cm intervals, using a transverse supporting material; and jungle gym-like steric guides in which a plurality of guides 4 in a wire or thin rod form or in the thin pipe form are anteroposteriorly and laterally fixed at appropriate vertical intervals, for example, 1-cm to 200-cm intervals, using a transverse supporting material.

The transverse supporting material is not only useful for keeping the intervals between the guides almost the same, but useful in enhancing the strength of guides that are in a planar or curved shape as a whole or guides that are steric as a whole. Such a supporting material may be made of the same material or a different material as or from that of the guides.

The guide-contact flow-down type polymerization apparatus constituting the aromatic branched polycarbonate manufacturing apparatus of the present embodiment is an apparatus that evaporates a low-boiling substance from a liquid containing the substance having a lower boiling point than that of the liquid.

The liquid may have ordinary temperature and is usually supplied in a heated state from the liquid feed port 1 to the guide-contact flow-down type polymerization apparatus. A jacket or the like is usually preferably placed on an external wall face of this guide-contact flow-down type polymerization apparatus. It is preferred to perform, for example, the heating and/or heat retention of the liquid supply zone 3, the flow path control component 20, or the porous plate 2 or the heat retention of the evaporation zone 5 or the porous plate 2 by heating with a water vapor, a heat medium, or the like through this jacket, if necessary.

The guide-contact flow-down type polymerization apparatus of the present embodiment is not only used as an apparatus for mere concentration of liquids, but can be used as an evaporation apparatus targeting relatively highly viscous liquids, such as a polymerization apparatus for a condensation polymer, a purification apparatus for thermoplastic polymers containing low-boiling substances such as monomers, oligomers, or byproducts, or a separation and recovery apparatus of thermoplastic polymers from their solutions. Thus, when the liquid to be supplied from the liquid supply zone 3 is a monomer for manufacturing a condensation polymer, a mixture of two or more monomers, a prepolymer of a condensation polymer, or a melted liquid of a condensation polymer, and the low-boiling substance is a by-product and/or an oligomer formed through polycondensation reaction, the guide-contact flow-down type polymerization apparatus of the present embodiment can be used as a polymerization apparatus for a condensation polymer in order to improve the degree of polymerization of the prepolymer of a condensation polymer and/or the polymer by evaporatively removing the low-boiling substance from the melted liquid.

Preferred examples of the condensation polymer include: polycarbonates such as aliphatic polycarbonate, aromatic polycarbonate, and various co-polycarbonates; and polyester polycarbonates.

Use of the aromatic branched polycarbonate manufacturing apparatus having the guide-contact flow-down type polymerization apparatus mentioned above can stably manufacture a high-purity and high-performance condensation polymer with no stain, gelled substance, or solid foreign matter and without variation in molecular weight for a long time.

The guide-contact flow-down type polymerization apparatus constituting the aromatic branched polycarbonate manufacturing apparatus of the present embodiment is suitable for evaporatively removing a low-boiling substance from a relatively highly viscous liquid.

For example, in the case of using the guide-contact flow-down type polymerization apparatus of the present embodiment as a polymerization vessel for condensation polymers, this polymerization vessel is free from the inevitable disadvantage of conventionally known polymerization vessels that a portion of a liquid resides while heated for a long time at some location, whereby the residing liquid causes denaturation such as staining, gelling, cross-linking, excessive increase in molecular weight, solidification, burning, or carbonization, and such a denatured product gradually or intensively contaminates a polymer. The guide-contact flow-down type polymerization apparatus constituting the aromatic branched polycarbonate manufacturing apparatus of the present embodiment has excellent effects that are not found in conventional polymerization vessels, in addition to the absence of such a disadvantage.

Specifically, the temperature of reaction in manufacturing aromatic branched polycarbonate by polymerizing a melted prepolymer obtained from, for example, an aromatic dihydroxy compound and diaryl carbonate, usually needs to be in the range of 200 to 350°C. Particularly, in the latter half of polymerization, the viscosity thereof is quickly elevated, and an aromatic monohydroxy compound formed through equilibrium reaction from the resulting ultrahigh-viscosity substance must be extracted. Therefore, in the case of using a conventional polymerization vessel, for example, a horizontal biaxial stirring type reactor for an ultrahigh-viscosity polymer, the reaction must be performed at a high temperature of 300°C or higher and further under high vacuum of 133 Pa or less for a long time. In addition, a high-molecular-weight form for a sheet, etc. is difficult to manufacture.

However, in the guide-contact flow-down type polymerization apparatus constituting the aromatic branched polycarbonate manufacturing apparatus of the present embodiment, efficient surface renewal with internal stirring is performed. Therefore, the polymerization reaction can progress at a relatively low temperature. Thus, the reaction temperature is preferably from 100 to 290°C, further preferably from 150 to 270°C. A feature of the aromatic branched polycarbonate manufacturing apparatus of the present embodiment is that polymerization can sufficiently progress at a lower temperature than that of conventional mechanical stirring type polymerization vessels. This constitutes one of the reasons why high-quality aromatic polycarbonate with no stain and no reduction in physical properties can be manufactured.

Furthermore, conventionally known polymerization vessels have the disadvantage that air or the like leaks into a seal part of a stirrer under high vacuum, causing contamination by foreign matter, for example. By contrast, in the guide-contact flow-down type polymerization apparatus constituting the aromatic branched polycarbonate manufacturing apparatus of the present embodiment, the chance of leak of air or the like thereinto or contamination by foreign matter is very small because of the absence of mechanical stirring and the absence of a seal part of a stirrer. Thus, high-purity and high-performance aromatic branched polycarbonate can be manufactured.

In the case of manufacturing a condensation polymer using the aromatic branched polycarbonate manufacturing apparatus of the present embodiment, a reaction rate can be enhanced by removing a low-boiling substance formed as a by-product through equilibrium reaction with the progression of polymerization reaction to the outside of the reaction system. Thus, for example, a method of introducing an inert gas that does not adversely affect the reaction, such as a nitrogen, argon, helium, carbon dioxide, or lower hydrocarbon gas, to the guide-contact flow-down type polymerization apparatus, and removing the low-boiling substance by entrainment into such a gas, or a method of performing the reaction under reduced pressure is preferably used. Alternatively, a combined method of these methods is also preferably used. In these cases as well, an inert gas does not have to be introduced in a large amount to the guide-contact flow-down type polymerization apparatus, and can be introduced to the extent that the inside is retained in an inert gas atmosphere.

In the case of manufacturing a condensation polymer using the aromatic branched polycarbonate manufacturing apparatus of the present embodiment, the reaction pressure of the guide-contact flow-down type polymerization apparatus differs depending on the type of a by-product low-boiling substance, the type and molecular weight of a polymer to be manufactured, a polymerization temperature, etc. In the case of manufacturing aromatic branched polycarbonate from a melted prepolymer obtained using, for example, bisphenol A and diphenyl carbonate, the reaction pressure is preferably in the range of 400 to 3,000 PaA when the number-average molecular weight of the polymer to be manufactured is in the range of 5,000 or smaller, and is preferably in the range of 50 to 500 PaA when the number-average molecular weight is from 5,000 to 10,000. A reaction pressure of preferably 300 PaA or lower, particularly preferably in the range of 20 to 250 PaA, is preferably used when the number-average molecular weight is 10,000 or larger.

In the case of manufacturing a condensation polymer using the guide-contact flow-down type polymerization apparatus constituting the aromatic branched polycarbonate manufacturing apparatus of the present embodiment as a polymerization vessel, the polymer having the degree of polymerization of interest may be manufactured using only one guide-contact flow-down type polymerization apparatus, or a scheme in which two or more guide-contact flow-down type polymerization apparatuses are connected so as to sequentially elevate the degree of polymerization may be adopted according to the degree of polymerization of a melted monomer serving as a raw material or a melted prepolymer, the yield of the polymer, etc.

In such a case, it is preferred that two or more guide-contact flow-down type polymerization apparatuses should be connected in series, in parallel, or both in series and in parallel.

In this case, the respective guide-contact flow-down type polymerization apparatuses can independently adopt guides and reaction conditions suitable for the degree of polymerization of a prepolymer or a polymer to be manufactured.

For example, in a scheme in which a first guide-contact flow-down type polymerization apparatus, a second guide-contact flow-down type polymerization apparatus, a third guide-contact flow-down type polymerization apparatus, a fourth guide-contact flow-down type polymerization apparatus ... are used, and the degree of polymerization is elevated in this order, S1 ≥ S2 ≥ S3 ≥ S4 ≥ ... can be established when the total external surface area of all the guides in each polymerization apparatus is defined as S1, S2, S3, S4 ...

The polymerization temperature may be the same temperature among the respective polymerization apparatuses or may be sequentially elevated.

The polymerization pressure may be sequentially lowered in the respective polymerization apparatuses.

In this context, for example, in the case of using two polymerization apparatuses, a first guide-contact flow-down type polymerization apparatus and a second guide-contact flow-down type polymerization apparatus, and elevating the degree of polymerization in this order, it is preferred to use guides in which total external surface area S1 (m²) of all the guides of the first polymerization apparatus, and total external surface area S2 (m²) of all the guides of the second polymerization apparatus should satisfy the following formula (XVI): $1 \leq S 1 / S 2 \leq 20$

The value of S1/S2 is 1 or more, whereby variation in molecular weight can be suppressed, and stable manufacturing is possible for a long period. Thus, the desired yield can be obtained.

S1/S2 is 20 or less, whereby the flow rate of a melted prepolymer flowing down on the guides in the second polymerization apparatus can be controlled. As a result, the residence time of the melted prepolymer can be sufficiently secured, and a polymer having a necessary molecular weight can be obtained. The range is more preferably 1.5 ≤ S1/S2 ≤ 15.

In the aromatic branched polycarbonate manufacturing apparatus of the present embodiment, an inert gas absorption apparatus for allowing an inert gas to be absorbed to a melted prepolymer of a condensation polymer before supply to the guide-contact flow-down type polymerization apparatus is preferably further placed.

In the case of using a plurality of guide-contact flow-down type polymerization apparatuses connected, an inert gas absorption apparatus for allowing an inert gas to be absorbed to a melted prepolymer before supply to each of the guide-contact flow-down type polymerization apparatuses is preferably placed in each of the guide-contact flow-down type polymerization apparatuses. The inert gas absorption apparatus thus placed can further enhance the advantageous effects of the present invention.

Hereinafter, the case of using a pair of one guide-contact flow-down type polymerization apparatus and one inert gas absorption apparatus will be described.

A melted prepolymer is introduced to the inert gas absorption apparatus before being supplied to the guide-contact flow-down type polymerization apparatus. In the inert gas absorption apparatus, the melted prepolymer is treated with an inert gas so that the inert gas is absorbed to the melted prepolymer and thereby absorbed in a specific amount of 0.0001 to 1 NL (wherein NL (normal litter) represents a volume measured under conditions of standard temperature and pressure) per kg of the melted prepolymer to the melted prepolymer. Subsequently, the melted prepolymer with this specific amount of the inert gas absorbed is supplied to the guide-contact flow-down type polymerization apparatus and polymerized.

The phrase "melted prepolymer is treated with an inert gas" means that the inert gas is absorbed to the melted prepolymer under conditions where the melted prepolymer is difficult to polymerize.

The amount of the inert gas absorbed to the melted prepolymer is in the range of preferably 0.0001 to 1 NL, more preferably 0.001 to 0.8 NL, further preferably 0.005 to 0.6 NL, per kg of the melted prepolymer.

If the amount of the inert gas absorbed is smaller than 0.0001 NL per kg of the melted prepolymer, a polymerization rate-elevating effect achieved by using the inert gas-absorbed prepolymer and a stable aromatic branched polycarbonate manufacturing effect achieved by using the inert gas-absorbed prepolymer are small. The amount of the inert gas absorbed to the melted prepolymer does not have to be larger than 1 NL per kg of the melted prepolymer.

The advantageous effects of the present invention can be further enhanced by polymerizing the melted prepolymer with the inert gas absorbed in the numeric range described above in the guide-contact flow-down type polymerization apparatus constituting the aromatic branched polycarbonate manufacturing apparatus of the present embodiment.

The amount of the inert gas absorbed to the melted polymer can be easily measured, usually, by directly measuring the amount of the inert gas supplied. When the inert gas is absorbed to the melted prepolymer while circulated in the inert gas absorption apparatus, the amount of the inert gas absorbed can be determined from difference between the amount of the inert gas supplied and the amount of the inert gas discharged. The amount of the inert gas absorbed can also be measured from the amount of a pressure decreased in the inert gas absorption apparatus resulting from the supply of the melted prepolymer in a predetermined amount to the inert gas absorption apparatus charged with the inert gas having a predetermined pressure, and the absorption of the inert gas to the melted prepolymer. Alternatively, the amount of the inert gas absorbed may be measured by a batch scheme which involves supplying a predetermined amount of the melted prepolymer in a batch manner to the inert gas absorption apparatus, and then measuring the amount of the inert gas absorbed, or a continuous scheme which involves continuously supplying the melted prepolymer to the inert gas absorption apparatus, and measuring the amount of the inert gas absorbed while continuously extracting the melted prepolymer.

In the present embodiment, the inert gas absorption apparatus is used for allowing an inert gas to be absorbed by treating a melted prepolymer with the inert gas at a predetermined pressure under conditions where the melted prepolymer is difficult to polymerize.

The phrase "allowing an inert gas to be absorbed to a melted prepolymer" or "inert gas is absorbed to a melted prepolymer" means that the inert gas is dispersed and/or dissolved in the melted prepolymer.

The dispersion means a state where the inert gas is mixed as air bubbles into the melted prepolymer to form a gas-liquid mixed phase. The dissolution means a state where the inert gas blends in the melted prepolymer to form a homogeneous liquid phase.

The inert gas is particularly preferably dissolved in the melted prepolymer, not merely dispersed in the melted prepolymer.

For efficiently dissolving the inert gas in the melted prepolymer, it is preferred to enhance contact efficiency by increasing a gas-liquid interface area or to carry out the absorption of the inert gas under pressurization of the inert gas.

The inert gas absorption apparatus constituting the aromatic polycarbonate manufacturing apparatus of the present embodiment is not particularly limited by its model as long as the apparatus can allow an inert gas to be absorbed to a melted prepolymer. Examples thereof include known apparatuses such as packed tower type absorption apparatuses, plate tower type absorption apparatuses, spray tower type absorption apparatuses, fluidized packed tower type absorption apparatuses, liquid film cross-flow absorption type absorption apparatuses, high-speed spiral-flow absorption apparatuses, and absorption apparatuses using mechanical power, described in Kagaku Souchi Sekkei (Chemical Apparatus Design in English) - operation series No. 2, revised, gas absorption, p. 49-54 (March 15, 1981, issued by Kagaku Kogyo Co., Ltd.), and absorption apparatuses allowing the melted prepolymer to drop along the guides in an inert gas atmosphere.

Alternatively, the absorption apparatus may allow the inert gas to be directly supplied into a piping through which the melted prepolymer is supplied to the guide-contact flow-down type polymerization apparatus. A spray tower type absorption apparatus or an absorption apparatus that allows the melted prepolymer to drop along the guides is particularly preferably used.

An apparatus in the same form as that of the guide-contact flow-down type polymerization apparatus is particularly preferable as the inert gas absorption apparatus.

Since the inert gas absorption apparatus is operated under conditions that allow polymerization to rarely progress, an excellent feature of the apparatus in this form, albeit totally functionally different from the guide-contact flow-down type polymerization apparatus, is that very efficient inert gas absorption in a short time is possible owing to a very large surface area per mass of the melted product during flow-down on the guides, and very favorable surface renewal and internal stirring of the melted product in corporation.

Unlike the guide-contact flow-down type polymerization apparatus, the inert gas absorption apparatus is substantially free from change in viscosity of the melted prepolymer between upper and lower parts of the guides and therefore has the ability to highly treat the melted prepolymer per unit time. Thus, the inert gas absorption apparatus is generally smaller than the guide-contact flow-down type polymerization apparatus even if these apparatuses are in the same form.

A preferred method for manufacturing the aromatic branched polycarbonate according to the present embodiment will be described.

When the number-average molecular weight of the melted prepolymer before and after inert gas absorption is defined as M₁ and M₂, respectively, change in molecular weight between before and after inert gas absorption (M₂ - M₁) is substantially preferably 2,000 or less, more preferably 1,000 or less, still more preferably 500 or less.

The temperature at which the inert gas is absorbed to the melted prepolymer is not particularly limited as long as the prepolymer is in a melted state. The temperature is in the range of usually from 150 to 350°C, preferably from 180 to 300°C, more preferably from 230 to 270°C.

Pressure Pg (PaA) at which the inert gas is absorbed to the melted prepolymer is preferably equal to or higher than the pressure used for manufacturing the melted prepolymer.

Specifically, the inert gas is preferably absorbed under a pressure condition equal to or higher than the reaction pressure used in manufacturing the melted aromatic branched polycarbonate prepolymer by reacting an aromatic dihydroxy compound with diaryl carbonate.

The pressure Pg (PaA) is higher than pressure Pp (PaA) of the subsequent polymerization reaction in the guide-contact flow-down type polymerization apparatus and preferably satisfies a relationship of the following formula with M₁ (number-average molecular weight of the melted prepolymer before inert gas absorption): $Pg > 4 \times {10}^{12} \times {{M}_{1}}^{- 2.6871}$

If the pressure Pg (PaA) at which the inert gas is absorbed to the melted prepolymer does not satisfy the relationship of the formula, a polymerization rate-elevating effect achieved by using the inert gas-absorbed prepolymer and a stable aromatic branched polycarbonate manufacturing effect achieved by using the inert gas-absorbed prepolymer are small.

The pressure for inert gas absorption is particularly preferably ordinary pressure or pressurization because the absorption rate of the inert gas to the melted prepolymer is enhanced, and consequently, the inert gas absorption apparatus can be small.

The upper limit of the pressure for inert gas absorption is not particularly limited, and the inert gas absorption is performed at a pressure of usually 2 × 10⁷ PaA or lower, preferably 1 × 10⁷ PaA or lower, more preferably 5 × 10⁶ PaA or lower.

The method for allowing an inert gas to be absorbed to a melted prepolymer in the inert gas absorption apparatus may be a method of allowing a large portion of the inert gas supplied to the inert gas absorption apparatus to absorbed into the melted prepolymer, or may be a method of allowing a portion of the supplied inert gas to be absorbed into the melted prepolymer.

Examples of the former method include a method of using a spray tower type absorption apparatus or an apparatus that allows the inert gas to be absorbed while allowing the melted prepolymer to drop along the guides, supplying the inert gas in an amount almost equal to the target amount of the inert gas absorbed into the melted prepolymer, and allowing the inert gas to be absorbed while keeping the pressure of the apparatus almost constant, and a method using an apparatus that directly supplies the inert gas into a piping through which the melted prepolymer is supplied to the guide-contact flow-down type polymerization apparatus.

Examples of the latter method include a method of using, as the inert gas absorption apparatus, a spray tower type absorption apparatus or an apparatus that allows the inert gas to be absorbed while allowing the melted prepolymer to drop along the guides, circulating the inert gas in more than the amount of the inert gas absorbed into the melted prepolymer in the inert gas absorption apparatus, and discharging an excess of the inert gas from the inert gas absorption apparatus.

The former method is particularly preferred from the viewpoint of a smaller amount of the inert gas used.

The inert gas absorption can be performed by any of a continuous method of continuously supplying the melted prepolymer to the inert gas absorption apparatus so that the inert gas is absorbed thereto, and continuously extracting the inert gas-absorbed melted prepolymer, and a batch method of charging the absorption apparatus with the melted prepolymer in a batch manner so that the inert gas is absorbed thereto.

The inert gas is a generic name for gases that do not cause chemical reaction with the melted prepolymer and are stable under polymerization conditions. Examples of the inert gas include nitrogen, argon, helium, carbon dioxide, organic compounds that are in a gas form at a temperature at which the prepolymer keeps its melted state, and lower hydrocarbon gases having 1 to 8 carbon atoms. Nitrogen is particularly preferred.

In the guide-contact flow-down type polymerization apparatus mentioned above in the method for manufacturing the aromatic branched polycarbonate of the present embodiment, it is preferred for keeping the pressure of the inert gas-absorbed melted prepolymer at a predetermined pressure within a melted prepolymer supply piping from the inert gas absorption apparatus to the guide-contact flow-down type polymerization apparatus that a predetermined pressure regulating valve should be placed immediately before the entrance of the guide-contact flow-down type polymerization apparatus and thereby control the pressure of the melted prepolymer.

The inside of the guide-contact flow-down type polymerization apparatus has relatively high vacuum, and the melted prepolymer at or near a supply port to this apparatus tends to become a low-pressure state by aspiration into this apparatus. Hence, the inert gas absorbed in the inert gas absorption apparatus may be separated from the melted prepolymer and aggregated. Hence, for preventing these events, it is preferred to supply the melted prepolymer to the guide-contact flow-down type polymerization apparatus while maintaining a pressure equal to or higher than the pressure at which the inert gas is absorbed to the melted prepolymer in the inert gas absorption apparatus.

Specifically, the pressure is preferably in the range of 15 kPaA to 200 kPaA, more preferably 20 kPaA to 150 kPaA, further preferably 20 to 100 kPaA.

If the pressure regulating valve is not placed therein or if the pressure is lower than the pressure at which the inert gas is absorbed to the melted prepolymer, the pressure of the melted prepolymer within the piping is unstable so that the inert gas (e.g., nitrogen) temporarily absorbed to the melted prepolymer is separated or aggregated, resulting in unstable homogeneity of the melted prepolymer. This inhibits a uniform and continuous foaming phenomenon of the melted prepolymer within the guide-contact flow-down type polymerization apparatus. Thus, a stable product cannot be manufactured, or reduction in color, fisheye, or foreign matter such as a gel occurs easily.

On the other hand, if the pressure exceeds 200 kPaA, no effect is changed. Such a pressure is not practical because such a pressure places an excessive burden on a discharge gear pump or a piping of the inert gas absorption apparatus and requires improving pressure resistance. Therefore, the upper limit value is preferably 200 kPaA.

The aromatic polycarbonate manufacturing apparatus of the present embodiment may be any apparatus that satisfies various conditions mentioned above and has mechanical strength appropriate therefor, and may be provided with an apparatus or equipment having any of other functions necessary for continuous operation.

The aromatic polycarbonate manufacturing apparatus of the present embodiment may have a plurality of aforementioned guide-contact flow-down type polymerization apparatuses or inert gas absorption apparatuses joined or may be provided with an apparatus or equipment having any of other functions except for evaporation.

From viewpoints similar to those mentioned above, when the aromatic branched polycarbonate manufacturing apparatus of the present embodiment is configured such that a guide-contact flow-down type polymerization apparatus is further connected with the guide-contact flow-down type polymerization apparatus, and an inert gas absorption apparatus is placed before each of these guide-contact flow-down type polymerization apparatuses, it is preferred that the inert gas-absorbed melted prepolymer should be supplied such that a pressure thereof within a melted prepolymer supply piping from the inert gas absorption apparatus to each of the guide-contact flow-down type polymerization apparatuses is kept at 15 kPaA to 200 kPaA, more preferably 20 kPaA to 150 kPaA, further preferably 20 to 100 kPaA, by a pressure regulating valve placed immediately before the entrance of each of the guide-contact flow-down type polymerization apparatuses.

In the aromatic branched polycarbonate manufacturing apparatus of the present embodiment, the material of the guide-contact flow-down type polymerization apparatus or the piping is not particularly limited and is usually selected from a stainless steel material, a carbon steel material, metal materials such as Hastelloy, nickel, titanium, chromium, and other alloys, and a highly heat-resistant polymer material. The surface made of such a material may be variously treated, if necessary, by plating, lining, passivation treatment, acid washing, phenol washing, or the like. For example, stainless steel, nickel, or glass lining is preferred, and stainless steel is particularly preferred.

Discharge pump 8 for discharging a melted prepolymer or aromatic branched polycarbonate from extraction port 12 is usually preferably a gear pump that can quantitatively discharge a highly viscous substance. The material of such a gear pump may be stainless steel or may be any of other special metals.

### [Material for use in aromatic polycarbonate manufacturing]

Hereinafter, an aromatic dihydroxy compound and diaryl carbonate will be described which are materials for use in manufacturing aromatic branched polycarbonate using the aromatic branched polycarbonate manufacturing apparatus of the present embodiment.

### (Aromatic dihydroxy compound)

The aromatic dihydroxy compound for use in manufacturing aromatic polycarbonate is a compound represented by the following formula:

HO-Ar-OH

wherein Ar represents a divalent aromatic group.

The divalent aromatic group Ar is defined as mentioned above.

In the case of manufacturing aromatic branched polycarbonate using the aromatic branched polycarbonate manufacturing apparatus of the present embodiment, one of the aromatic dihydroxy compounds may be used singly, or two or more thereof may be used.

The aromatic dihydroxy compound is preferably, for example, bisphenol A. A trivalent aromatic trihydroxy compound may be used in combination therewith for introducing a branched structure.

The bisphenol A is particularly preferably a high-purity product for polycarbonate having a chlorine content of 1 ppb or less.

### (Diaryl carbonate)

The diaryl carbonate for use in manufacturing aromatic polycarbonate using the aromatic polycarbonate manufacturing apparatus of the present embodiment is represented by the following formula: 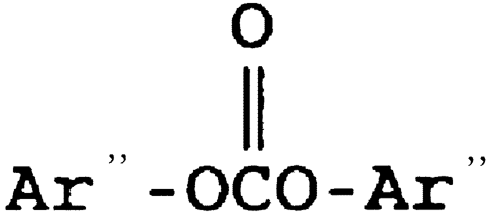 wherein Ar" is defined as mentioned above, and each Ar'' is preferably a monovalent aromatic group having 5 to 20 carbon atoms.

The diaryl carbonate is preferably symmetric diaryl carbonate such as unsubstituted diphenyl carbonate or lower alkyl-substituted diphenyl carbonate (e.g., ditolyl carbonate and di-t-butylphenyl carbonate), particularly preferably diphenyl carbonate which is diaryl carbonate having the simplest structure. Only one of these diaryl carbonates may be used singly, or two or more thereof may be used in combination.

The diphenyl carbonate serving as a raw material for manufacturing aromatic polycarbonate is particularly preferably manufactured by the following method.

First, ethylene carbonate is obtained by manufacturing through the reaction of ethylene oxide with CO₂ and purification, and dimethyl carbonate is obtained by manufacturing through the reaction thereof with methanol and purification. Next, the dimethyl carbonate and purified phenol are reacted by a reactive distillation method to obtain diphenyl carbonate, which is purified to obtain the diphenyl carbonate of interest. This diphenyl carbonate is an ultrahigh-purity product free from an alkali metal, an alkaline earth metal, and chlorine.

### (Melted prepolymer)

The melted prepolymer for use in manufacturing aromatic branched polycarbonate using the aromatic branched polycarbonate manufacturing apparatus of the present embodiment is manufactured from the aromatic dihydroxy compound and the diaryl carbonate described above. The ratio (feed ratio) between these compounds used differs depending on the types of the aromatic dihydroxy compound and the diaryl carbonate used, a polymerization temperature, and other polymerization conditions. The diaryl carbonate is used at a ratio of usually 0.9 to 2.5 mol, preferably 0.95 to 2.0 mol, more preferably 0.98 to 1.5 mol, per mol of the aromatic dihydroxy compound.

The prepolymer in a melted state, i.e., the melted prepolymer, manufactured from the aromatic dihydroxy compound and the diaryl carbonate means a melted product that is manufactured from the aromatic dihydroxy compound and the diaryl carbonate, is in the course of polymerization, and has a lower degree of polymerization than that of aromatic branched polycarbonate having the degree of polymerization of interest, and may be an oligomer.

The average degree of polymerization of the melted aromatic branched polycarbonate prepolymer that can be manufactured in the aromatic polycarbonate manufacturing apparatus of the present embodiment is not particularly limited and is usually approximately 2 to 2,000, though differing depending on its chemical structure.

The melted prepolymer for use as a polymerization raw material can be manufactured by a known method.

### (Catalyst)

The reaction for manufacturing aromatic branched polycarbonate from the aromatic dihydroxy compound and the diaryl carbonate can be carried out without the addition of a catalyst and is performed, if necessary, in the presence of a catalyst in order to enhance a polymerization rate.

The catalyst is not particularly limited as long as the catalyst can be used in this field.

Examples of the catalyst include, but are not limited to the following: alkali metal and alkaline earth metal hydroxides such as lithium hydroxide, sodium hydroxide, potassium hydroxide, and calcium hydroxide; alkali metal salts, alkaline earth metal salts, and quaternary ammonium salts of boron and aluminum hydroxides such as lithium aluminum hydride, sodium borohydride, and tetramethylammonium borohydride; alkali metal and alkaline earth metal hydrides such as lithium hydride, sodium hydride, and calcium hydride; alkali metal and alkaline earth metal alkoxides such as lithium methoxide, sodium ethoxide, and calcium methoxide; alkali metal and alkaline earth metal aryloxides such as lithium phenoxide, sodium phenoxide, magnesium phenoxide, LiO-Ar-OLi, and NaO-Ar-Ona (wherein Ar is an aryl group); organic acid salts of alkali metals and alkaline earth metals such as lithium acetate, calcium acetate, and sodium benzoate; zinc compounds such as zinc oxide, zinc acetate, and zinc phenoxide; boron oxide, boric acid, sodium borate, trimethyl borate, tributyl borate, and triphenyl borate; tin compounds such as tin oxide, dialkyl tin oxide, dialkyl tin carboxylate, tin acetate, tin compounds bonded to an alkoxy group or an aryloxy group (e.g., ethyl tin tributoxide), and organic tin compounds; lead compounds such as lead oxide, lead acetate, lead carbonate, basic carbonate, and alkoxides or aryloxides of lead and organic lead; and quaternary ammonium salts and quaternary phosphonium salts.

Only one of these catalysts may be used singly, or two or more thereof may be used in combination. The amount of such a catalyst used is in the range of usually 10⁻¹⁰ to 1% by mass, preferably 10⁻⁹ to 10⁻¹% by mass, further preferably 10⁻⁸ to 10⁻²% by mass, based on the raw material aromatic dihydroxy compound.

The catalyst used remains in the product aromatic branched polycarbonate when a melt transesterification method is carried out. Most of these catalysts usually adversely affect the physical properties of the polymer. Thus, it is preferred to minimize the amount of the catalyst used. Since the guide-contact flow-down type polymerization apparatus constituting the aromatic branched polycarbonate manufacturing apparatus of the present embodiment efficiently performs polymerization, the amount of the catalyst used can be decreased. This is also one of the advantages of the aromatic branched polycarbonate manufacturing apparatus of the present embodiment that can manufacture high-quality aromatic branched polycarbonate.

The aromatic polycarbonate to be manufactured in the aromatic polycarbonate manufacturing apparatus of the present embodiment has a repeat unit represented by the following formula: 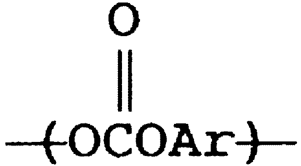 wherein Ar is defined as mentioned above.

The aromatic branched polycarbonate is particularly preferably aromatic branched polycarbonate containing 85 mol% or more of a repeat unit represented by the following formula in all repeat units:

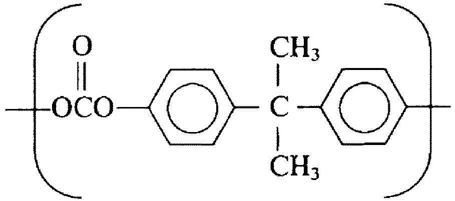

The terminal groups of the aromatic branched polycarbonate to be manufactured in the aromatic branched polycarbonate manufacturing apparatus of the present embodiment usually consist of a hydroxy group and an aryl carbonate group represented by the following formula: 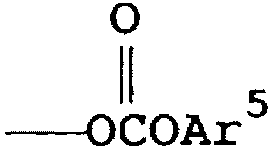 wherein Ar⁵ is defined as mentioned above about Ar".

The molar ratio between the hydroxy group and the aryl carbonate group which are terminal groups of aromatic branched polycarbonate is not particularly limited and is usually in the range of hydroxy group:aryl carbonate group = 95:5 to 5:95, preferably in the range of 90:10 to 10:90, further preferably in the range of 80:20 to 20:80. Aromatic branched polycarbonate in which the proportion of a phenyl carbonate group that occupies the terminal groups is 85% by mol or more is particularly preferred.

The aromatic branched polycarbonate to be manufactured in the aromatic branched polycarbonate manufacturing apparatus of the present embodiment is, as mentioned above, aromatic branched polycarbonate having a repeat unit represented by the general formula (1) in a main chain and a branched chain, and having one or more kinds of branched structures represented by the general formulas (2), (3), and (4) in the main chain and the branched chain, wherein a ratio of a total amount of substance of the branched structures to an amount of substance of the repeat unit represented by the general formula (1) is in the numeric range of 0.01% by mol to 0.5% by mol; and containing one or more kinds of oligomers represented by the general formulas (5), (6), and (7), wherein a total mass of the oligomers is 0.6% by mass or less, and a ratio of an amount of substance of the oligomers represented by the general formulas (5) and (6) to a total amount of substance of the oligomers is 60% by mol or less.

Use of the aromatic branched polycarbonate manufacturing apparatus of the present embodiment can stably manufacture aromatic branched polycarbonate without variation in molecular weight for a long time.

The aromatic branched polycarbonate manufacturing apparatus of the present embodiment may be any apparatus that satisfies various conditions mentioned above and has mechanical strength appropriate therefor, and may be provided with an apparatus or equipment having any of other functions necessary for continuous aromatic branched polycarbonate manufacturing operation.

The aromatic branched polycarbonate manufacturing apparatus of the present embodiment may have a plurality of aforementioned guide-contact flow-down type polymerization apparatuses joined or may be provided with an apparatus or equipment having any of other functions except for polymerization.

In the aromatic branched polycarbonate manufacturing apparatus of the present embodiment, a known catalyst deactivator described in, for example, International Publication No. WO 2005/121213 may be used in manufacturing aromatic branched polycarbonate.

The amount of the catalyst deactivator used is preferably a ratio of 0.5 to 50 mol, more preferably a ratio of 0.5 to 10 mol, further preferably a ratio of 0.8 to 5 mol, per mol of the transesterification catalyst. The catalyst deactivator can be added to, for example, an extruder.

In a process of manufacturing aromatic branched polycarbonate using the aromatic branched polycarbonate manufacturing apparatus of the present embodiment, various additives may be added. For example, in Figure 5, aromatic branched polycarbonate obtained in the second guide-contact flow-down type polymerization apparatuses 48A and 48B is sent in a melted state from the second guide-contact flow-down type polymerization apparatuses 48A and 48B to their respective post-stage devices 50A and 50B, and an additive can be added to the post-stage devices 50A and 50B.

The post-stage devices 50A and 50B are not particularly limited as long as the post-stage devices are conventional devices that receive melted aromatic branched polycarbonate. Examples thereof include extruders, pelletizers, sifters, dryers, silos, and packaging machines.

For example, melted aromatic branched polycarbonate is supplied to an extruder where the melted aromatic branched polycarbonate is then mixed with other resins such as ABS or PET, additives such as a thermal stabilizer, an antioxidant, a light stabilizer, an ultraviolet absorber, a mold release agent, and a flame retardant, and arbitrary other additives such as an organic or inorganic pigment or dye, a metal deactivator, an antistatic agent, a lubricant, and a nucleating agent.

One of these other resins and arbitrary additives may be used singly, or two or more thereof may be used in combination.

The aromatic branched polycarbonate of the present embodiment may further contain an aliphatic dihydroxy compound (diol), for example, ethylene glycol, 1,4-butanediol, 1,4-cyclohexanedimethanol, and 1,10-decanediol; a dicarboxylic acid, for example, succinic acid, isophthalic acid, 2,6-naphthalenedicarboxylic acid, adipic acid, cyclohexanedicarboxylic acid, and terephthalic acid; and an oxy acid, for example, lactic acid, p-hydroxybenzoic acid and 6-hydroxy-2-naphthoic acid.

As mentioned above, use of the aromatic branched polycarbonate manufacturing apparatus of the present embodiment can continuously manufacture aromatic branched polycarbonate.

The aromatic branched polycarbonate obtained by the method for manufacturing the aromatic branched polycarbonate of the present embodiment can undergo a predetermined molding step to obtain a molded product.

The molding step can be a known molding step, and the aromatic branched polycarbonate can be molded using, for example, an injection molding machine, an extrusion molding machine, a blow molding machine, or a sheet molding machine to obtain a molded product.

The obtained molded product can be used as a material for a wide range of purposes such as automobiles, electricity, electronics, OA, optical media, building material, and medicine.

According to the present embodiment, an aromatic branched polycarbonate that is unlikely to be stained and has favorable hue stability against heat can be efficiently provided.

### Examples

Hereinafter, the present invention will be specifically described with reference to specific Example and Comparative Examples. However, the present invention is not limited by these Example and Comparative Examples by any means.

Raw materials of aromatic branched polycarbonate to be manufactured in each of the following Example and Comparative Examples will be given below.

### [Raw material]

### ((1) Aromatic dihydroxy compound)

BPA-1: bisphenol A manufactured by NIPPON STEEL Chemical & Material Co., Ltd.

### ((2) Diaryl carbonate)

DPC-1: diphenyl carbonate manufactured by the method described in International Publication No. WO 2006/006585

Methods for measuring the physical properties and characteristics of aromatic branched polycarbonate to be manufactured in each of the following Example and Comparative Examples will be given below.

### [Physical properties and characteristics]

### ((1) Molecular weight and number-average molecular weight (Mn))

A prepolymer or aromatic branched polycarbonate pellets were to be measured. The measurement was performed at a temperature of 40°C using gel permeation chromatography (HLC-8320GPC manufactured by Tosoh Corp., two columns of TSK-GEL Super Multipore HZ-M, RI detector) and using tetrahydrofuran as an eluent.

The molecular weight of the prepolymer or the pellets was determined using a polystyrene-based molecular weight calibration curve from standard monodisperse polystyrene (EasiVial manufactured by Varian Medical Systems, Inc.) according to the following formula: ${M}_{PC} = 0.3591 {{M}_{PS}}^{1.0388}$ wherein M_{PC} represents the molecular weight of the aromatic branched polycarbonate, and M_{PS} represents the molecular weight of the polystyrene.

### ((2) Measurement of hue)

Aromatic branched polycarbonate pellets dried at 120°C for 5 hours in a hot-air dryer were used. The pellets were continuously molded into 50 mm long × 90 mm wide × 3.0 mm thick test pieces by an injection molding machine having a cylinder temperature of 300°C and a mold temperature of 90°C to obtain test pieces.

The test pieces were measured by the transmission method at a view angle of 10° using a spectrophotometric colorimeter (Vista manufactured by Hunter Associates Laboratory, Inc.) and a D65 light source, and the degree of yellowness was indicated by a b* value (CIE No. 15 (ASTM E308) specification).

### ((3) Molar ratio of oligomers represented by general formulas (5), (6), and (7) to total amount of substance of oligomers)

0.15 g of the aromatic branched polycarbonate was dissolved in 7 mL of tetrahydrofuran. Then, approximately 15 g of methanol was added thereto, and the mixture was hand-shaken approximately 20 times and left standing for 30 minutes.

Within 40 minutes after still standing, the supernatant was filtered through a filter having an aperture of 0.5 µm. The peak intensity of each oligomer was measured by reverse-phase liquid chromatography (UPLC manufactured by Nihon Waters K.K.).

In the reverse-phase liquid chromatography, measurement was performed at a column oven temperature of 40°C using ACQUITY UPLC column: HSS T3 1.8 µm column (manufactured by Nihon Waters K.K.) and a mixed eluent consisting of methanol/distilled water at a mixing ratio of 85/15 as an eluent.

Detection was performed using a UV detector having a wavelength of 210 nm.

### ((4) Total mass ratio of oligomers represented by general formulas (5), (6), and (7))

An area ratio at molecular weights of 500 to 800 to the whole molecular weight curve was calculated from measurement results obtained in the molecular weight measurement in the section (1), and used as the total mass ratio (% by mass) of the oligomers to the mass of the aromatic branched polycarbonate.

### ((5) Amount of substance (% by mol) of branched structure)

55 mg of the aromatic branched polycarbonate was dissolved in 2 mL of tetrahydrofuran. Then, 0.5 mL of a solution of 5 N potassium hydroxide in methanol was added thereto, and the mixture was stirred at 25°C for 2 hours for complete hydrolysis.

Then, 0.3 mL of concentrated hydrochloric acid was added thereto, and the amount of substance of branched structures represented by the general formulas (2), (3), and (4) based on the amount of substance of a repeat unit represented by the general formula (1) in the aromatic branched polycarbonate was measured by reverse-phase liquid chromatography (LC-1100 manufactured by Agilent Technologies Inc.).

In the reverse-phase liquid chromatography, measurement was performed at a column oven temperature of 40°C under a gradient condition of methanol/0.1% aqueous phosphoric acid solution ratio starting at 20/80 up to 100/0 using Inertsil ODS-3 column (registered trademark; manufactured by GL Sciences Inc.) and a mixed eluent consisting of methanol and a 0.1% aqueous phosphoric acid solution as an eluent.

Detection was performed using a UV detector having a wavelength of 300 nm, and quantification was performed from the absorption coefficient of a standard substance.

### ((6) Measurement of MI)

Aromatic branched polycarbonate pellets dried at 120°C for 5 hours in a hot-air dryer were measured under conditions of 300°C and a 1.2 kg load using a melt flow test apparatus (Mflow manufactured by Zwick Roell GmbH) (unit: g/10 min) (ISO1133 specification).

Measurement was performed (the number of measurement points: 150 points) every 2 hours for 300 hours from 50 hours after the start of manufacturing, and a mean and standard deviation were determined.

### ((7) Hot-air test)

A test piece was manufactured by the same method as in the test piece manufactured in the measurement of hue in the section (2). The test piece was left standing for 1,000 hours in a gear oven kept at 120°C.

Then, hue was measured, and difference between before the hot-air test and after the test (Δb* value) was determined.

### [Example 1]

Aromatic branched polycarbonate was manufactured as described below using an aromatic branched polycarbonate manufacturing apparatus having the configuration shown in Figure 5.

In the aromatic branched polycarbonate manufacturing apparatus, polymerization raw materials and a catalyst were added to mixing tank 31 and mixed.

Next, the mixture was transferred to dissolved mixture reservoirs 33A and 33B through transfer pump 32, and further transferred therefrom through transfer pumps 34A and 34B to first polymerization vessel 35 where prepolymerization was performed.

The resultant was further subjected to prepolymerization in second polymerization vessel 37 via gear pump 36 for discharge to obtain an aromatic branched polycarbonate prepolymer.

The aromatic branched polycarbonate prepolymer was transferred to first inert gas absorption apparatus 39 via supply pump 38, and after optional adjustment of the supply pressure of an inert gas-absorbed prepolymer to a guide-contact flow-down type polymerization apparatus given below by pressure regulating valve 41, transferred and supplied to first guide-contact flow-down type polymerization apparatus 42 where the prepolymer was polymerized. Here, a low-molecular-weight component phenol was discharged from a vent.

Examples of the pressure regulating valve 41 include valve-like configurations. The pressure regulating valve 41 is not limited by its configuration as long as the solubility of an inert gas can be adjusted. The same holds true for pressure regulating valves 47A and 47B given below.

Next, the aromatic branched polycarbonate prepolymer was transferred to second inert gas absorption apparatus 44 via supply pump 43 and further transferred therefrom using supply pumps 46A and 46B. The supply pressure of an inert gas-absorbed prepolymer to a guide-contact flow-down type polymerization apparatus given below was optionally adjusted by pressure regulating valves 47A and 47B, and the resultant was further transferred to second guide-contact flow-down type polymerization apparatuses 48A and 48B connected thereto where the prepolymer was polymerized. Here, phenol was discharged from a vent.

The resultant was further transferred through supply pumps 49A and 49B, and an additive was added to post-stage devices 50A and 50B to obtain the aromatic branched polycarbonate of interest.

Figure 1 shows a schematic configuration diagram of the first and second inert gas absorption apparatuses 39 and 44.

The inert gas absorption apparatuses 39 and 44 are substantially similar in apparatus configuration to guide-contact flow-down type polymerization apparatuses 42, 48A, and 48B mentioned later, so that the same reference signs are used to designate such similar sites.

As for the first inert gas absorption apparatus 39, in inert gas absorption zone 15 which is an internal space, the upper part of side casing 10 is in a cylindrical shape, and bottom casing 11 which is a tapered lower part constituting the lower structure of the side casing 10 has an inverted cone shape. In Figure 1, L = 500 cm, h = 400 cm, D = 200 cm, d = 20 cm, and C = 150°.

The external diameter of each guide 4 disposed in the inert gas absorption zone 15 which is an internal space is r = 0.3 cm. The total external surface area of the guides 4 is S = 60 m². The pore diameter of porous plate 2 disposed at the upper part of the inert gas absorption zone 15 which is an internal space is approximately 0.2 cm.

The second inert gas absorption apparatus 44 has almost the same shape as that of the first inert gas absorption apparatus 39 except that the pore diameter of the porous plate is approximately 0.6 cm.

Figure 2 shows a schematic diagram of the guide-contact flow-down type polymerization apparatuses 42, 48A, 48B.

The first guide-contact flow-down type polymerization apparatus 42 has flow path control component 20 in a disc form having a thickness of approximately 2 cm, and guides 4 in a columnar form or a pipe form, as shown in Figure 3.

Figure 3 shows a schematic configuration diagram of the upper parts of the guides 4 of the guide-contact flow-down type polymerization apparatus.

In the guide-contact flow-down type polymerization apparatus, the flow path control component 20 is suspension-fixed from the upper part such that the interval from upper internal wall face 23 of liquid supply zone 3 is approximately 8 cm.

The interval between the internal sidewall face 22 of the liquid supply zone 3 and the flow path control component 20 is approximately 9 cm, and the interval between the porous plate 2 and the flow path control component 20 is approximately 8 cm.

The marginal part of this flow path control component 20 in a disc form is tailored such that the perpendicular cross section is a semicircle having a radius of approximately 1 cm, and devised such that no liquid resides in the marginal part.

The cross section of the junction between the internal sidewall face 22 of the liquid supply zone and the porous plate 2 is tailored such that the inside as shown in Figure 4 is in a concave form, and angle E of the rising part thereof is approximately 170 degrees (°).

The whole material of this guide-contact flow-down type polymerization apparatus is stainless steel.

Discharge pump 8 is preferably a gear pump for a highly viscous concentrated liquid and is a usual liquid sending pump for a concentrated liquid whose viscosity is not that high.

The first guide-contact flow-down type polymerization vessel 42 has side casing 10 in a cylindrical shape and bottom casing 11 in a cone shape. In Figure 2, L = 950 cm, and h = 850 cm.

The internal diameter of the side casing in evaporation zone 5 is D = 400 cm, and the internal diameter of liquid discharge port 7 of the bottom casing 11 in a cone shape is d = 20 cm. C is 150 degrees.

The total external surface area of all the guides 4 is S = 750 m².

The internal cross-sectional area on a horizontal plane of the side casing 10 in the evaporation zone 5 which is an internal space is A = 12.56 m².

The ratio between the internal cross-sectional area A and internal cross-sectional area B (m²) on a horizontal plane of the liquid discharge port 7 is A/B = 400.

D/d is 20.

The ratio between length L (cm) of the side casing of the evaporation zone 5 and the internal diameter D (cm) is L/D = 2.375.

The external diameter of each guide is r = 0.3 cm.

The average number of pores per m² of the porous plate 2 (number/m²) is N = approximately 500. The pore diameter of the porous plate is approximately 0.2 cm.

The ratio between upper area T of the porous plate 2 including the upper areas of the pores of the porous plate 2, and total effective cross-sectional area q of the pores is T/Q = approximately 1300.

Interval K between the guide 4 closest to the internal wall face of the evaporation zone 5 and the internal wall face is approximately 14 cm.

The ratio between space volume V (approximately 2.03 m³) where the liquid can exist in the liquid supply zone 3 from liquid feed port 1 (junction between the feed port and the upper internal wall of the liquid supply zone) to the upper face of the porous plate 2, and upper area T (approximately 12.56 m²) of the porous plate 2 including the upper areas of the pores of the porous plate 2, i.e., the value of V/T, is approximately 0.162 (m) .

Space volume Y of the evaporation zone 5 is approximately 135 m³.

The ratio between the space volume V where a liquid can exist in the liquid supply zone 3 from the liquid feed port 1 to the upper face of the porous plate 2, and the space volume Y of the evaporation zone, i.e., the value of Y/V, is approximately 67.

In Example 1, the respective values of the aromatic branched polycarbonate manufacturing apparatus satisfied all of the formula (I) to the formula (XV) mentioned above.

A low-boiling substance-containing liquid supplied from the liquid feed port 1 to the liquid supply zone 3 in Figure 2 passes through between the upper face of the flow path control component 20 and the upper internal wall face 23 of the supply zone 3 and between the internal sidewall face 22 of the supply zone 3 and the flow path control component 20 in Figure 3, and are uniformly distributed to the guides 4 from the pores (21, etc.) of the porous plate 2 while flowing mainly in a direction from the peripheral part of the porous plate 2 toward the central part.

The guide-contact flow-down type polymerization apparatus is provided at its lower part with inert gas supply port 9 and provided at its upper part with vacuum vent 6 (which is usually connected to a gas aggregating machine and a pressure reduction apparatus) serving as a low-boiling substance evaporant extraction port.

A jacket or a heating tube for a heat medium is placed outside the guide-contact flow-down type polymerization apparatus such that a predetermined temperature can be retained with a heat medium.

The second guide-contact flow-down type polymerization apparatuses 48A and 48B have flow path control component 20 in a disc form having a thickness of approximately 2 cm, and guides 4 in the structure shown in Figure 3**.**

The flow path control component 20 in a disc form is suspension-fixed from the upper part such that the interval from upper internal wall face 23 of liquid supply zone 3 is approximately 8 cm.

The interval between the internal sidewall face 22 of the liquid supply zone 3 and the flow path control component 20 is approximately 9 cm, and the interval between the porous plate 2 and the flow path control component 20 is approximately 8 cm.

The marginal part of this flow path control component 20 in a disc form is tailored such that the perpendicular cross section is a semicircle having a radius of approximately 1 cm, and devised such that no liquid resides in the marginal part.

The cross section of the junction between the internal sidewall face 22 of the liquid supply zone 3 and the porous plate 2 is tailored such that the inside as shown in Figure 4 is in a concave form, and angle E of the rising part thereof is approximately 170 degrees (°).

The whole material of the guide-contact flow-down type polymerization apparatuses is stainless steel.

Discharge pump 8 is disposed at the lower parts of the second guide-contact flow-down type polymerization apparatuses 48A and 48B, and is preferably a gear pump for a highly viscous concentrated liquid and is preferably a usual liquid sending pump for a concentrated liquid whose viscosity is not that high.

The second guide-contact flow-down type polymerization apparatuses have side casing 10 in a cylindrical shape and bottom casing 11 in a cone shape.

The second guide-contact flow-down type polymerization apparatuses have L of 1,000 cm and h of 900 cm in Figure 2.

The internal diameter of the side casing 10 in evaporation zone 5 is D = 500 cm, and the internal diameter of liquid discharge port 7 of the bottom casing 11 in a cone shape is d = 40 cm. C is 155 degrees (°).

The total external surface area of all the guides 4 is S = 250 m².

The internal cross-sectional area on a horizontal plane of the side casing 10 in the evaporation zone 5 which is an internal space is A = 19.625 m².

The ratio between the internal cross-sectional area A and internal cross-sectional area B (m²) on a horizontal plane of the liquid discharge port 7 is A/B = 156.25.

D/d is 12.5.

The ratio between length L (cm) of the side casing of the evaporation zone 5 and the internal diameter D (cm) is L/D = 2.

The external diameter of each guide is r = 0.3 cm.

The average number of pores per m² of the porous plate 2 (number/m²) is N = approximately 140. The pore diameter of the porous plate is approximately 0.4 cm.

The ratio between upper area T of the porous plate 2 including the upper areas of the pores of the porous plate 2, and total effective cross-sectional area Q of the pores is T/Q = approximately 470.

Interval K between the guide 4 closest to the internal wall face of the evaporation zone 5 and the internal wall face is approximately 15 cm.

The ratio between space volume V (approximately 3.17 m³) where the liquid can exist in the liquid supply zone 3 from liquid feed port 1 (junction between the feed port and the upper internal wall of the liquid supply zone) to the upper face of the porous plate 2, and upper area T (approximately 19.63 m²) of the porous plate including the upper areas of the pores, i.e., the value of V/T, is approximately 0.161 (m).

Space volume Y of the evaporation zone 5 is approximately 222.8 m³, and the ratio between the space volume V where a liquid can exist in the liquid supply zone 3 from the liquid feed port 1 to the upper face of the porous plate 2, and the space volume Y of the evaporation zone 5, i.e., the value of Y/V, is approximately 70.

In Example 1, the second guide-contact flow-down type polymerization apparatuses in the aromatic branched polycarbonate manufacturing apparatus satisfied all of the formula (I) to the formula (XV) mentioned above.

The second guide-contact flow-down type polymerization apparatuses 48A and 48B have the same structure of the liquid supply zone 3 as that of the first guide-contact flow-down type polymerization apparatus 42.

The ratio between total external surface area S1 (m²) of the guides 4 in the first guide-contact flow-down type polymerization apparatus 42 and total external surface area S2 (m²) of the guides 4 in one second guide-contact flow-down type polymerization apparatus (48A or 48B) is S1/S2 = 750/250 = 3.

The whole materials of the inert gas absorption apparatuses and the first and second guide-contact flow-down type polymerization apparatuses mentioned above are stainless steel except for the discharge pump 8.

Aromatic branched polycarbonate was manufactured using an aromatic branched polycarbonate manufacturing apparatus in which, as shown in Figure 5, two inert gas absorption apparatuses (first inert gas absorption apparatus 39 and second inert gas absorption apparatus 44) and two guide-contact flow-down type polymerization apparatuses (first guide-contact flow-down type polymerization apparatus 42 and second guide-contact flow-down type polymerization apparatuses 48A and 48B) were arranged and connected in series in the order of the first inert gas absorption apparatus 39, the first guide-contact flow-down type polymerization apparatus 42, the second inert gas absorption apparatus 44, and the second guide-contact flow-down type polymerization apparatuses (these two apparatuses were arranged in parallel).

The mixing tank 31 (internal capacity: 120 m³) was charged with 40 tons of melted diphenyl carbonate (DPC-1) of 160°C.

Subsequently, potassium hydroxide as a catalyst was added at 120 ppb by mass in terms of the amount of potassium per 45 tons of bisphenol A (BPA-1), and bisphenol A was added thereto over 1.8 hours while the temperature of the mixed liquid within the mixing tank was kept at 100°C or higher.

The amount of the bisphenol A added was 45.3 tons.

Subsequently, 6.67 tons of diphenyl carbonate were further added thereto such that the molar ratio of the diphenyl carbonate to the bisphenol A was 1.10. The amount of the diphenyl carbonate added was weighed using a Coriolis mass flowmeter, and the amount of the bisphenol A added was weighed using a measuring hopper provided with a load cell meter.

At the point in time when the temperature of the mixed liquid reached 180°C, the mixed liquid was transferred to the dissolved mixture reservoir (internal capacity: 120 m³) 33A over 1 hour.

The reaction mixture retained for 4 to 6 hours in the dissolved mixture reservoir 33A was filtered at a flow rate of 14 ton/hr through two polymer filters differing in pore diameter (not shown; pore diameter: 5 µm on the upstream side and 2.5 µm on the downstream side) arranged in series between the dissolved mixture reservoir 33A and the stirring vessel type first polymerization vessel 35.

The reaction mixture thus filtered was heated in a preheater (not shown) and supplied to the stirring vessel type first polymerization vessel 35. The liquid temperature at the exit of the preheater was 230°C.

At the point in time when the reaction mixture in the dissolved mixture reservoir 33A was decreased to a level lower than a predetermined value, the source of supply of the reaction mixture to the stirring vessel type first polymerization vessel 35 was switched from the dissolved mixture reservoir 33A to the dissolved mixture reservoir 33B. The supply of the reaction mixture to the stirring vessel type first polymerization vessel 35 was continuously performed by repeating the operation of alternately switching the source of supply between the dissolved mixture reservoirs 33A and 33B every 3.9 hours.

In both the dissolved mixture reservoirs 33A and 33B, an internal coil and jacket were placed, and 180°C was retained.

Stirring was performed under reduced pressure in the stirring vessel type first polymerization vessel 35 and the stirring vessel type second polymerization vessel 37 where the reaction mixture was polymerized while generated phenol was removed to obtain a prepolymer.

In this respect, the stirring vessel type first polymerization vessel 35 had a temperature of 230°C and a pressure of 13.3 kPaA, and the stirring vessel type second polymerization vessel 37 had a temperature of 265°C and a pressure of 2.66 kPaA.

The obtained melted aromatic branched polycarbonate prepolymer (number-average molecular weight Mn: 2,200) was continuously supplied to the liquid supply zone 3 from the liquid feed port 1 of the first inert gas absorption apparatus through the supply pump 38.

The prepolymer continuously supplied to the inert gas absorption zone 15 which was an internal space through the porous plate 2 serving as a distributor plate of the first inert gas absorption apparatus 39 absorbed an inert gas while flowing down along the guides 4.

The pressure of the inert gas absorption zone 15 which was an internal space of the first inert gas absorption apparatus 39 was kept at 180 kPaA by supplying nitrogen gas from the inert gas supply port 9.

The melted prepolymer (which contained 0.04 NL of nitrogen per kg of the melted prepolymer) that dropped from the lower parts of the guides 4 to a tapered lower part 11 of the casing of the first inert gas absorption apparatus 39 was continuously discharged through the discharge pump 8 (in Figure 5, which corresponds to reference number 40) such that the amount was almost constant at the bottom of the apparatus. The pressure of the melted prepolymer entering a valve was kept at 75 kPaA by the pressure regulating valve 41 located in the liquid feed port 1 of the first guide-contact flow-down type polymerization apparatus 42, and the melted prepolymer was continuously supplied to the liquid supply zone 3 through the liquid feed port 1 of the first guide-contact flow-down type polymerization apparatus 42.

The pressure of the evaporation zone 5 which was an internal space of the first guide-contact flow-down type polymerization apparatus 42 was kept at 800 PaA through the vacuum vent 6.

The melted aromatic branched polycarbonate prepolymer with an elevated degree of polymerization (number-average molecular weight Mn: 4,700) that dropped from the lower parts of the guides 4 to a tapered lower part 11 of the casing of the first guide-contact flow-down type polymerization apparatus 42 was continuously extracted at a constant flow rate from the liquid discharge port 7 through the discharge pump 8 (in Figure 5, which corresponds to reference number 43) such that the amount was almost constant at the bottom. Subsequently, the extracted prepolymer was continuously supplied to the liquid supply zone 3 of the second inert gas absorption apparatus 44.

The melted prepolymer was continuously supplied to the inert gas absorption zone 15 which was an internal space through the porous plate 2 serving as a distributor plate of the second inert gas absorption apparatus 44.

The melted prepolymer was allowed to flow down along the guides 4 to absorb an inert gas.

The pressure of the inert gas absorption zone 15 which was an internal space of the second inert gas absorption apparatus 44 was kept at 75 kPaA by supplying nitrogen gas from the inert gas supply port 9.

The melted prepolymer (which contained 0.05 NL of nitrogen per kg of the melted prepolymer) that dropped from the lower parts of the guides 4 to the bottom casing 11 which was a tapered lower part of the casing of the second inert gas absorption apparatus was divided into two portions (at a ratio of 50:50) by the three-way polymer valve (45) and continuously discharged in a constant amount through the discharge pumps 8 (in Figure 5, which correspond to reference numbers 46A and 46B) such that the amount was almost constant at the bottom. The pressure of the melted prepolymer entering a valve was kept at 200 kPaA by the pressure regulating valves (47A and 47B) located in the liquid feed ports 1 of the second guide-contact flow-down type polymerization apparatuses 48A and 48B, and the melted prepolymer was continuously supplied to the respective supply zones 3.

The melted prepolymer continuously supplied to the evaporation zone 5 which was an internal space through the porous plate 2 serving as a distributor plate in each of the second guide-contact flow-down type polymerization apparatuses underwent polymerization reaction while flowing down along the guides 4.

The pressure of the evaporation zone 5 which was an internal space of each of the second guide-contact flow-down type polymerization apparatuses was kept at 120 PaA through the vacuum vent 6.

The aromatic branched polycarbonate that dropped from the lower parts of the guides 4 to the bottom casing 11 which was a tapered lower part of the casing of each of the second guide-contact flow-down type polymerization apparatuses was continuously extracted as a strand from the post-stage device (50A or 50B) through the discharge pump 8 (49A or 49B) such that the amount was almost constant at the bottom. The strand was cooled and then cut to obtain aromatic branched polycarbonate pellets.

The yield in each of the polymerization apparatuses was 4.0 ton/hr (a total of 8.0 ton/hr).

No additive was added.

Pellets for the amount of branches, the amount of oligomers, color, and a hot-air test were collected 150 hours after the start of manufacturing.

Each measurement or test was conducted using the aromatic branched polycarbonate obtained from the post-stage device 50A.

Each measurement or test was not carried out as to the post-stage device 50B because the manufacturing conditions were the same as those for the aromatic branched polycarbonate obtained in the post-stage device 50A.

### [Example 2] and [Comparative Examples 1 and 3]

Aromatic branched polycarbonate pellets were obtained in the same manner as in Example 1 described above except that the molar ratio of DPC-1 to BPA-1, the amount of the catalyst added, the amount of the reaction mixture supplied to the stirring vessel type first polymerization vessel 35, and the reaction temperature of the second guide-contact flow-down type polymerization apparatus were changed as described in Table 1 below.

Table 1 shows manufacturing conditions and measurement and test results.

### [Example 3]

Aromatic branched polycarbonate pellets were obtained in the same manner as in Example 1 described above except that pipings having the same internal diameter as that of the pipings for supplying to the first and second guide-contact flow-down type polymerization apparatuses were placed instead of the pressure regulating valves 41, 47A, and 47B. The position at which a pressure gauge was placed was the same as in Example 1.

Table 1 shows manufacturing conditions and measurement and test results.

### [Example 4]

Aromatic branched polycarbonate pellets were obtained in the same manner as in Example 1 described above except that nitrogen gas was supplied to the inert gas absorption zones 15 which were internal spaces of the first inert gas absorption apparatus and the second inert gas absorption apparatus to adjust their pressures to 180 kPaA and 200 kPaA, respectively, followed by the termination of nitrogen supply, and the point in time when manufacturing was started was set to after a lapse of 50 hours after the pressures of the inert gas absorption zones 15 which was the respective internal spaces became constant (state where nitrogen was not absorbed).

Table 1 shows manufacturing conditions and measurement and test results.

### [Example 5]

Aromatic branched polycarbonate pellets were obtained in the same manner as in Example 4 described above except that pipings having the same internal diameter as that of the pipings for supplying to the first and second guide-contact flow-down type polymerization apparatuses were placed instead of the pressure regulating valves 41, 47A, and 47B (the position at which a pressure gauge was placed was the same as in Example 1).

Table 1 shows manufacturing conditions and measurement and evaluation results.

### [Comparative Example 2]

Aromatic branched polycarbonate pellets were obtained in the same manner as in Example 5 described above except that the amount of the catalyst added, the amount of the reaction mixture supplied to the stirring vessel type first polymerization vessel 35, the pressure of the first guide-contact flow-down type polymerization apparatus, and the reaction temperature and the pressure of the second guide-contact flow-down type polymerization apparatus were changed as described in Table 1 below.

Table 1 shows manufacturing conditions and measurement and test results.

**[Table 1]**

| | | | Example 1 | Example 2 | Example 3 | Example 4 | Example 5 | Comparative Example 1 | Comparative Example 2 | Comparative Example 3 |
|---|---|---|---|---|---|---|---|---|---|---|
| Molar ratio of DPC-1 to BPA-1 | | | 1.10 | 1.15 | 1.10 | 1.10 | 1.10 | 1.10 | 1.10 | 1.05 |
| Amount of catalyst added (amount of potassium based on BPA-1) [wtppb] | | | 120 | 100 | 120 | 120 | 120 | 140 | 110 | 120 |
| Amount of reaction mixture supplied to stirring vessel type first polymerization vessel 35 [ton/h) | | | 14.0 | 14.0 | 14.0 | 14.0 | 14.0 | 17.0 | 12.0 | 15.5 |
| Pressure of melted prepolymer to be supplied to first guide-contact flow-down type polymerization apparatus [kPaA] | | | 75 | 75 | 34 | 75 | 35 | 75 | 27 | 75 |
| Mn of prepolymer supplied to first guide-contact flow-down type polymerization apparatus | | | 2,200 | 2,200 | 2,200 | 2,200 | 2,200 | 2,200 | 2,200 | 2,200 |
| Pressure of first guide-contact flow-down type polymerization apparatus [PaA] | | | 800 | 800 | 800 | 660 | 660 | 800 | 800 | 800 |
| Reaction temperature of first guide-contact flow-down type polymerization apparatus [°C] | | | 265 | 265 | 265 | 265 | 265 | 265 | 265 | 265 |
| Pressure of melted prepolymer to be supplied to second guide-contact flow-down type polymerization apparatus [kPaA] | | | 75 | 75 | 51 | 75 | 44 | 75 | 41 | 75 |
| Mn of prepolymer supplied to second guide-contact flow-down type polymerization apparatus | | | 4,700 | 4,700 | 4,700 | 4,200 | 4,200 | 4,700 | 4,500 | 4,700 |
| Pressure of second guide-contact flow-down type polymerization apparatus [PaA] | | | 120 | 120 | 120 | 90 | 90 | 120 | 110 | 120 |
| Reaction temperature of second guide-contact flow-down type polymerization apparatus [°C] | | | 280 | 270 | 280 | 280 | 280 | 290 | 280 | 280 |
| Yield of aromatic branched polycarbonate (total of 48A and 48B) [ton/h] | | | 8.0 | 8.0 | 8.0 | 8.0 | 8.0 | 9.7 | 6.9 | 8.9 |
| MI[g/10 min] | | | 10.1 | 10.0 | 10.1 | 10.3 | 10.3 | 9.8 | 10.1 | 10.2 |
| Standard deviation of MI | | | 0.18 | 0.19 | 0.26 | 0.37 | 0.36 | 0.22 | 0.33 | 0.24 |
| Amount of branched structure [% by mol] | | Branched structure of formula (2) | 0.237 | 0.059 | 0.235 | 0.242 | 0.241 | 0.564 | 0.326 | 0.215 |
| | | Branched structure of formula (3) | 0.027 | 0.007 | 0.028 | 0.028 | 0.028 | 0.060 | 0.035 | 0.021 |
| | | Branched structure of formula (4) | 0.003 | 0.001 | 0.002 | 0.003 | 0.003 | 0.006 | 0.004 | 0.001 |
| | Total of formulas (2) to (4) | | 0.267 | 0.067 | 0.265 | 0.273 | 0.272 | 0.630 | 0.365 | 0.237 |
| Amount of oligomer [% by mass] | Total of formulas (5) to (7) | | 0.39 | 0.22 | 0.52 | 0.43 | 0.42 | 0.41 | 0.89 | 0.38 |
| Oligomer ratio [% by mol] | | Oligomer of formula (5) | 29 | 16 | 29 | 30 | 30 | 28 | 28 | 68 |
| | | Oligomer of formula (6) | 11 | 5 | 12 | 12 | 12 | 9 | 11 | 23 |
| | Total of formulas (5) and (6) | | 40 | 21 | 41 | 42 | 42 | 37 | 39 | 91 |
| | Oligomer of formula (7) | | 60 | 79 | 59 | 58 | 58 | 63 | 61 | 9 |
| Hue [Δb^{*}] | | Before hot-air test | 0.25 | 0.17 | 0.22 | 0.26 | 0.27 | 0.42 | 0.30 | 0.42 |
| | | After hot-air test | 3.06 | 1.34 | 3.05 | 3.21 | 3.31 | 8.21 | 4.79 | 6.57 |
| | After - Before | | 2.81 | 1.17 | 2.83 | 2.95 | 3.04 | 7.79 | 4.49 | 6.15 |

The present application is based on Japanese Patent Application No. 2021-051384 filed on March 25, 2021 in the Japan Patent Office.

### Industrial Applicability

The aromatic branched polycarbonate of the present invention has industrial applicability in a field using high-quality aromatic branched polycarbonate as a material.

### Reference Signs List

1: Liquid feed port
2: Porous plate
3: Liquid supply zone
4: Guide
5: Evaporation zone which is an internal space
6: Vacuum vent
7: Liquid discharge port
8: Discharge pump
9: Inert gas supply port
10: Side casing
11: Bottom casing
12: Extraction port
15: Inert gas absorption zone which is an internal space
20: Flow path control component
21: Pore part of the porous plate
22: Internal sidewall face of the liquid supply zone
23: Upper internal wall face of the liquid supply zone
31: Mixing tank
32, 34A, and 34B: Transfer pump
33A and 33B: Dissolved mixture reservoir
35: First polymerization vessel
36: Gear pump for discharge
37: Second polymerization vessel
38, 40, 43, 46A, 46B, 49A, and 49B: Supply pump
39: First inert gas absorption apparatus
41, 47A, and 47B: Pressure regulating valve
42: First guide-contact flow-down type polymerization apparatus
44: Second inert gas absorption apparatus
45: Three-way polymer valve
48A and 48B: Second guide-contact flow-down type polymerization apparatus
50A: Post-stage device
50B: Post-stage device

## Claims

1. An aromatic branched polycarbonate that satisfies the following <condition (i)> to <condition (iii)>:
<condition (i)>
having a repeat unit represented by the following general formula (1) in a main chain and a branched chain, and
having one or more kinds of branched structures represented by the following general formulas (2), (3), and (4) in the main chain and the branched chain, wherein
a ratio of a total amount of substance of the branched structures to an amount of substance of the repeat unit represented by the following general formula (1), determined as described in the description, is from 0.01% by mol to 0.5% by mol: 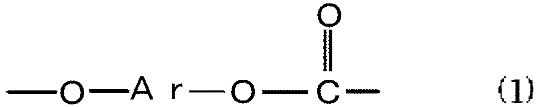 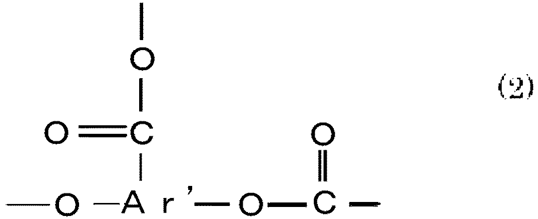 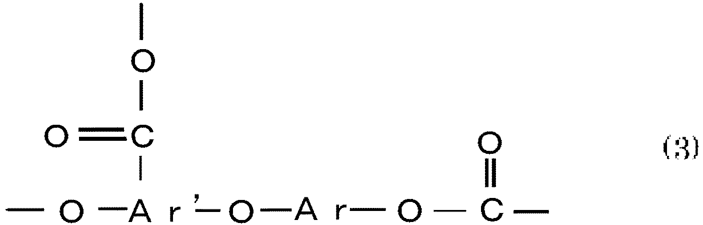 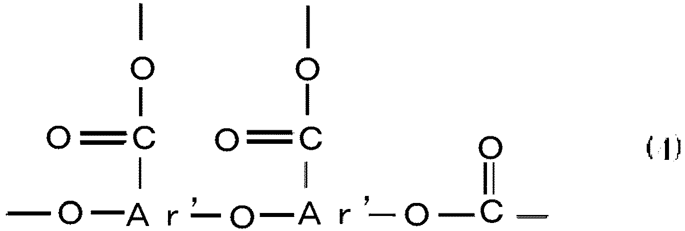
wherein Ar represents a divalent aromatic group, and Ar' represents a trivalent aromatic group;
<condition (ii)>
containing one or more kinds of oligomers represented by the following general formulas (5), (6), and (7), wherein a ratio of a total mass of the oligomers to a mass of the aromatic branched polycarbonate, determined as described in the description, is 0.6% by mass or less:
H-(O-Ar-O-C(=O)-)₂-OAr'' (5)
H-(O-Ar-O-C(=O)-)₂-O-Ar-OH (6)
Ar"O-C(=O)-(O-Ar-O-C(=O)-)₂-OAr" (7)
wherein Ar represents a divalent aromatic group, and Ar" represents an aromatic terminal group; and
<condition (iii)>
a ratio of a total amount of substance of the oligomers represented by the general formulas (5) and (6) to a total amount of substance of the oligomers, determined as described in the description, is 60% by mol or less.

2. The aromatic branched polycarbonate according to claim 1, wherein
in the <condition (i)>, the ratio of the total amount of substance of the branched structures to the amount of substance of the repeat unit represented by the general formula (1) is from 0.05% by mol to 0.4% by mol,
in the <condition (ii)>, the ratio of the total mass of the oligomers to the mass of the aromatic branched polycarbonate is 0.3% by mass or less, and
in the <condition (iii)>, the ratio of the total amount of substance of the oligomers represented by the general formulas (5) and (6) to the total amount of substance of the oligomers is 30% by mol or less.

3. The aromatic branched polycarbonate according to claim 1 or 2, wherein
MI (melt index) of the aromatic branched polycarbonate measured at a temperature of 300°C under a load of 1.2 kg is from 0.5 to 40 g/10 min.

4. A method for manufacturing the aromatic branched polycarbonate according to any one of claims 1 to 3, comprising the steps of:
supplying a nitrogen-absorbed aromatic branched polycarbonate prepolymer to a guide-contact flow-down type polymerization apparatus constituting an aromatic branched polycarbonate manufacturing apparatus such that a pressure thereof is kept at 15 kPaA to 200 kPaA; and
allowing the prepolymer to flow down along an external surface of a guide having no heating source in itself to evaporate a low-boiling substance.

5. The method for manufacturing the aromatic branched polycarbonate according to claim 4, wherein
the evaporation of the low-boiling substance is performed using the guide-contact flow-down type polymerization apparatus, and
the guide-contact flow-down type polymerization apparatus satisfies the following <condition (1)> to <condition (9)>:
<condition (1)>
having: a liquid feed port; a liquid supply zone for supplying a liquid to a guide of an evaporation zone through a porous plate; the evaporation zone provided with a plurality of guides extending downward from the porous plate in a space surrounded by the porous plate, a side casing, and a bottom casing; a vacuum vent disposed in the evaporation zone; and a liquid discharge port disposed in a lowermost part of the bottom casing;
<condition (2)>
a flow path control component having a function by which a liquid to be supplied from the liquid feed port to the porous plate flows in a direction from a peripheral part of the porous plate toward a central part in the liquid supply zone is placed in the liquid supply zone;
<condition (3)>
internal cross-sectional area A (m²) on a horizontal plane of the side casing of the evaporation zone satisfies the following formula (I): $0.7 \leq A \leq 300$
<condition (4)>
a ratio between the internal cross-sectional area A (m²) and internal cross-sectional area B (m²) on a horizontal plane of the liquid discharge port satisfies the following formula (II): $20 \leq A / B \leq 1000$
<condition (5)>
the bottom casing constituting the bottom of the evaporation zone is connected to the upper side casing at an angle of C degrees (°) with respect to the inside thereof, wherein the angle of C degrees satisfies the following formula (III): $110 \leq C \leq 165$
<condition (6)>
length h (cm) of the guide satisfies the formula (IV) : $150 \leq h \leq 5000$
<condition (7)>
total external surface area S (m²) of all the plurality of guides satisfies the formula (V): $2 \leq S \leq 50000$
<condition (8)>
average number N of pores per m² of the porous plate (number/m²) satisfies the formula (VI): $50 \leq N \leq 3000$ and
<condition (9)>
a ratio between upper area T (m²) of the porous plate including upper areas of the pores of the porous plate and total effective cross-sectional area Q (m²) of the pores satisfies the following formula (VII): $50 \leq T / Q \leq 3000$

6. The method for manufacturing the aromatic branched polycarbonate according to claim 4 or 5, wherein the amount of the liquid subjected to evaporation treatment is 1 or more ton per hour.

7. The method for manufacturing the aromatic branched polycarbonate according to claim 5 or 6, wherein
angle E degrees (°) formed by an internal sidewall face of the liquid supply zone and the porous plate satisfies the following formula (VIII): $100 \leq E < 180$

8. The method for manufacturing the aromatic branched polycarbonate according to any one of claims 5 to 7, wherein
distance K (cm) between the guide closest to an internal wall face of the side casing of the evaporation zone and the internal wall face satisfies the following formula (IX): $5 \leq K \leq 50$

9. The method for manufacturing the aromatic branched polycarbonate according to any one of claims 5 to 8, wherein
the side casing of the evaporation zone is in a cylindrical shape with internal diameter D (cm) and length L (cm), the bottom casing connected to an underpart of the side casing is in a cone shape, and the liquid discharge port at the lowermost part of the bottom casing in a cone shape is in a cylindrical shape with internal diameter d (cm), wherein
D, L, and d satisfy the following formulas (X), (XI), (XII), and (XIII): $100 \leq D \leq 1800$ $5 \leq D / d \leq 50$ $0.5 \leq L / D \leq 30$ $h - 20 \leq L \leq h + 300$ wherein in the formula (XIII), h (cm) represents the length of the guide.

10. The method for manufacturing the aromatic branched polycarbonate according to any one of claims 5 to 9, wherein
space volume V (m³) where a liquid can exist in the liquid supply zone from the liquid feed port to an upper face of the porous plate, and upper area T (m²) of the porous plate including upper areas of the pores of the porous plate satisfy the following formula (XIV): $0.02 \left(m\right) \leq V / T \leq 0.5 \left(m\right)$

11. The method for manufacturing the aromatic branched polycarbonate according to any one of claims 5 to 10, wherein
at least one of the guides is in a columnar form with external diameter r (cm), or in a pipe form that inhibits a liquid and/or a gaseous substance from entering the inside, wherein
the external diameter r satisfies the following formula (XV): $0.1 \leq r \leq 1$

12. The method for manufacturing the aromatic branched polycarbonate according to any one of claims 5 to 11, wherein
the guide-contact flow-down type polymerization apparatus has the plurality of guides, and
the plurality of guides are joined through a supporting material.

13. The method for manufacturing the aromatic branched polycarbonate according to any one of claims 5 to 12, wherein
an inert gas absorption apparatus for allowing an inert gas to be absorbed to a melted aromatic branched polycarbonate prepolymer before supply to the guide-contact flow-down type polymerization apparatus is placed, wherein
the inert gas-absorbed melted prepolymer is supplied to the guide-contact flow-down type polymerization apparatus such that a pressure thereof within a melted prepolymer supply piping from the inert gas absorption apparatus to the guide-contact flow-down type polymerization apparatus is kept at 15 kPaA to 200 kPaA by a pressure regulating valve placed immediately before the entrance of the guide-contact flow-down type polymerization apparatus.

14. The method for manufacturing the aromatic branched polycarbonate according to claim 13, wherein
a guide-contact flow-down type polymerization apparatus further connected with the guide-contact flow-down type polymerization apparatus is placed, and
an inert gas absorption apparatus for allowing an inert gas to be absorbed to a melted aromatic branched polycarbonate prepolymer before supply to each of the guide-contact flow-down type polymerization apparatuses is placed, wherein
the inert gas-absorbed melted prepolymer is supplied such that a pressure thereof within a melted prepolymer supply piping from the inert gas absorption apparatus to each of the guide-contact flow-down type polymerization apparatuses is kept at 15 kPaA to 200 kPaA by a pressure regulating valve placed immediately before the entrance of each of the guide-contact flow-down type polymerization apparatuses.

15. An aromatic branched polycarbonate manufacturing apparatus comprising
a guide-contact flow-down type polymerization apparatus that allows an aromatic branched polycarbonate prepolymer to flow down along an external surface of a guide having no heating source in itself, while evaporating a low-boiling substance, and
an inert gas absorption apparatus for allowing an inert gas to be absorbed to a melted aromatic branched polycarbonate prepolymer before supply to the guide-contact flow-down type polymerization apparatus, wherein
the guide-contact flow-down type polymerization apparatus
satisfies the following <condition (1)> to <condition (9)>, and
has a pressure regulating valve for controlling a pressure of the inert gas-absorbed melted prepolymer to 15 kPaA to 200 kPaA within a melted prepolymer supply piping from the inert gas absorption apparatus to the guide-contact flow-down type polymerization apparatus:
<condition (1)>
having: a liquid feed port; a liquid supply zone for supplying a liquid to a guide of an evaporation zone through a porous plate; the evaporation zone provided with a plurality of guides extending downward from the porous plate in a space surrounded by the porous plate, a side casing, and a bottom casing; a vacuum vent disposed in the evaporation zone; and a liquid discharge port disposed in a lowermost part of the bottom casing;
<condition (2)>
a flow path control component having a function by which a liquid to be supplied from the liquid feed port to the porous plate flows in a direction from a peripheral part of the porous plate toward a central part in the liquid supply zone is placed in the liquid supply zone;
<condition (3)>
internal cross-sectional area A (m²) on a horizontal plane of the side casing of the evaporation zone satisfies the following formula (I): $0.7 \leq A \leq 300$
<condition (4)>
a ratio between the internal cross-sectional area A (m²) and internal cross-sectional area B (m²) on a horizontal plane of the liquid discharge port satisfies the following formula (II): $20 \leq A / B \leq 1000$
<condition (5)>
the bottom casing constituting the bottom of the evaporation zone is connected to the upper side casing at an angle of C degrees (°) with respect to the inside thereof, wherein the angle of C degrees satisfies the following formula (III): $110 \leq C \leq 165$
<condition (6)>
length h (cm) of the guide satisfies the following formula (IV): $150 \leq h \leq 5000$
<condition (7)>
total external surface area S (m²) of all the plurality of guides satisfies the following formula (V): $2 \leq S \leq 50000$
<condition (8)>
average number N of pores per m² of the porous plate (number/m²) satisfies the following formula (VI): $50 \leq N \leq 3000$ and
<condition (9)>
a ratio between upper area T (m²) of the porous plate including upper areas of the pores of the porous plate and total effective cross-sectional area Q (m²) of the pores satisfies the following formula (VII) $50 \leq T / Q \leq 3000$

## Patentansprüche

1. Aromatisches verzweigtes Polycarbonat, das die folgende <Bedingung (i)> bis <Bedingung (iii)> erfüllt:
<Bedingung (i)>
es weist eine durch die folgende allgemeine Formel (1) dargestellte Wiederholungseinheit in einer Hauptkette und einer verzweigten Kette auf, und
es weist eine oder mehrere Arten von durch die folgenden allgemeinen Formeln (2), (3) und (4) dargestellten verzweigten Strukturen in der Hauptkette und der verzweigten Kette auf, wobei
ein Anteil der Gesamtsubstanzmenge der verzweigten Strukturen zur Substanzmenge der durch die folgende allgemeine Formel (1) dargestellten Wiederholungseinheit, bestimmt wie in der Beschreibung beschrieben, 0,01 Mol-% bis 0,5 Mol-% beträgt: 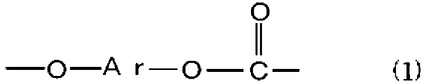 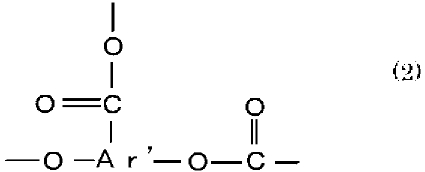 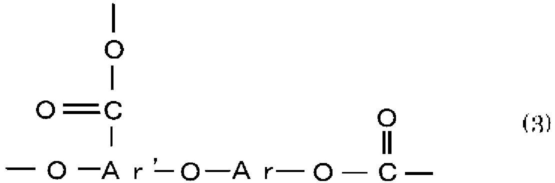 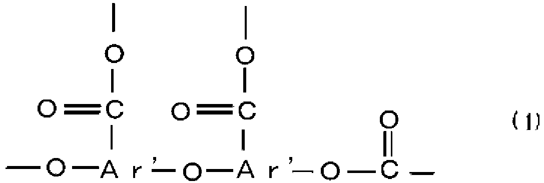 wobei Ar eine zweibindige aromatische Gruppe darstellt und Ar' eine dreibindige aromatische Gruppe darstellt;
<Bedingung (ii)>
es enthält eine oder mehrere Arten von durch die folgenden allgemeinen Formeln (5), (6) und (7) dargestellten Oligomeren, wobei der Anteil der Gesamtmasse der Oligomere zur Masse des aromatischen verzweigten Polycarbonats, bestimmt wie in der Beschreibung beschrieben, 0,6 Massen-% oder weniger beträgt:
H-(O-Ar-O-C(=O)-)₂-OAr" (5)
H-(O-Ar-O-C(=O)-)₂-O-Ar-OH (6)
Ar"O-C(=O)-(O-Ar-O-C(=O)-)₂-OAr" (7)
wobei Ar eine zweibindige aromatische Gruppe darstellt und Ar" eine aromatische Endgruppe darstellt; und
<Bedingung (iii)>
der Anteil einer Gesamtsubstanzmenge der durch die allgemeinen Formeln (5) und (6) dargestellten Oligomere zur Gesamtsubstanzmenge der Oligomere, bestimmt wie in der Beschreibung beschrieben, beträgt 60 Mol-% oder weniger.

2. Aromatisches verzweigtes Polycarbonat nach Anspruch 1, wobei
in der <Bedingung (i)> der Anteil der Gesamtsubstanzmenge der verzweigten Strukturen zu der Substanzmenge der durch die allgemeine Formel (1) dargestellten Wiederholungseinheit von 0,05 Mol-% bis 0,4 Mol-% ist,
in der <Bedingung (ii)> der Anteil der Gesamtmasse der Oligomere zu der Masse des aromatischen verzweigten Polycarbonats 0,3 Massen-% oder weniger ist, und
in der <Bedingung (iii)> der Anteil der Gesamtsubstantmenge der durch die allgemeinen Formeln (5) und (6) dargestellten Oligomere zur Gesamtsubstanzmenge der Oligomere 30 Mol-% oder weniger ist.

3. Aromatisches verzweigtes Polycarbonat nach Anspruch 1 oder 2, wobei
der MI (Schmelzindex) des aromatischen verzweigten Polycarbonats, gemessen bei einer Temperatur von 300°C unter einer Last von 1,2 kg, von 0,5 bis 40 g/10 min beträgt.

4. Verfahren zur Herstellung des aromatischen verzweigten Polycarbonats nach einem der Ansprüche 1 bis 3, mit den Schritten:
Zuführen eines stickstoffabsorbierten aromatischen verzweigten Polycarbonat-Prepolymers zu einer Polymerisationsvorrichtung vom Führungskontakt-Herabfließ-Typ, die Bestandteil einer Herstellungsvorrichtung für aromatisches verzweigtes Polycarbonat ist, derart, dass der Druck bei 15 kPaA bis 200 kPaA gehalten wird; und
Herabfließenlassen des Prepolymers entlang einer äußeren Oberfläche einer Führung, die selbst keine Heizquelle aufweist, um eine niedrigsiedende Substanz zu verdampfen.

5. Verfahren zur Herstellung des aromatischen verzweigten Polycarbonats nach Anspruch 4, wobei
die Verdampfung der niedrigsiedenden Substanz unter Verwendung der Führungskontakt-Herabfließ-Polymerisationsvorrichtung durchgeführt wird, und
die Führungskontakt-Herabfließ-Polymerisationsvorrichtung die folgende <Bedingung (1)> bis <Bedingung (9)> erfüllt:
<Bedingung (1)>
sie weist auf: eine Flüssigkeitszuführöffnung; eine Flüssigkeitszufuhrzone zum Zuführen einer Flüssigkeit zu einer Führung einer Verdampfungszone durch eine poröse Platte; die Verdampfungszone, welche mit einer Vielzahl von Führungen versehen ist, die von der porösen Platte aus in einem Raum, der von der porösen Platte, einem seitlichen Gehäuse und einem Bodengehäuse umgeben ist, nach unten verlaufen; ein in der Verdampfungszone angeordnetes Vakuumventil; und eine Flüssigkeitsabgabeöffnung, die in einem untersten Teil des Bodengehäuses angeordnet ist;
<Bedingung (2)>
ein Fließwegsteuerbauteil mit einer Funktion, dass eine Flüssigkeit, die von der Flüssigkeitszuführöffnung zu der porösen Platte zugeführt werden soll, in einer Richtung von einem peripheren Teil der porösen Platte zu einem zentralen Teil in der Flüssigkeitszufuhrzone fließt, ist in der Flüssigkeitszufuhrzone angeordnet;
<Bedingung (3)>
die Innenquerschnittsfläche A (m²) auf einer horizontalen Ebene des seitlichen Gehäuses der Verdampfungszone erfüllt die folgende Formel (I): $0 , 7 \leq A \leq 300$
<Bedingung (4)>
ein Verhältnis zwischen der Innenquerschnittsfläche A (m²) und einer Innenquerschnittsfläche B (m²) auf einer horizontalen Ebene der Flüssigkeitsabgabeöffnung erfüllt die folgende Formel (II): $20 \leq A / B \leq 1000$
<Bedingung (5)>
das Bodengehäuse, welches ein Bestandteil des Bodens der Verdampfungszone ist, ist mit dem oberen seitlichen Gehäuse in einem Winkel von C Grad (°) in Bezug zu dessen Innenseite verbunden, wobei der Winkel von C Grad die folgende Formel (III) erfüllt: $110 \leq C \leq 165$
<Bedingung (6)>
die Länge h (cm) der Führung erfüllt die Formel (IV): $150 \leq h \leq 5000$
<Bedingung (7)>
der gesamte Außenoberflächenbereich S (m²) aller der Vielzahl von Führungen erfüllt die Formel (V): $2 \leq S \leq 50000$
<Bedingung (8)>
die mittlere Anzahl N von Poren pro m² der porösen Platte (Anzahl/m²) erfüllt die Formel (VI): $50 \leq N \leq 3000$ und
<Bedingung (9)>
ein Verhältnis zwischen der oberen Fläche T (m²) der porösen Platte einschließlich oberer Flächen der Poren der porösen Platte, und der gesamten effektiven Querschnittsfläche Q (m²) der Poren erfüllt die folgende Formel (VII): $50 \leq T / Q \leq 3000$

6. Verfahren zur Herstellung des aromatischen verzweigten Polycarbonats nach Anspruch 4 oder 5, wobei die Menge der der Verdampfungsbehandlung unterzogen Flüssigkeit 1 oder mehr Tonnen pro Stunde ist.

7. Verfahren zur Herstellung des aromatischen verzweigten Polycarbonats nach Anspruch 5 oder 6, wobei
der Winkel E Grad (°), welcher durch eine innere Seitenwandfläche der Flüssigkeitszufuhrzone und die poröse Platte gebildet wird, die folgende Formel (VIII) erfüllt: $100 \leq E < 180$

8. Verfahren zur Herstellung des aromatischen verzweigten Polycarbonats nach einem der Ansprüche 5 bis 7, wobei
der Abstand K (cm) zwischen der Führung, die der inneren Wandfläche des seitlichen Gehäuses der Verdampfungszone am nächsten ist, und der inneren Wandfläche die folgende Formel (IX) erfüllt: $5 \leq K \leq 50$

9. Verfahren zur Herstellung des aromatischen verzweigten Polycarbonats nach einem der Ansprüche 5 bis 8, wobei
das seitliche Gehäuse der Verdampfungszone in einer zylindrischen Form mit einem Innendurchmesser D (cm) und einer Länge L (cm) vorliegt, das mit einem Unterteil des seitlichen Gehäuses verbundene Bodengehäuse in einer Kegelform vorliegt, und die Flüssigkeitsabgabeöffnung am untersten Teil des in Kegelform vorliegenden Bodengehäuses in einer zylindrischen Form mit einem Innendurchmesser d (cm) vorliegt, wobei
D, L und d die folgenden Formeln (X), (XI), (XII) und (XIII) erfüllen: $100 \leq D \leq 1800$ $5 \leq D / d \leq 50$ $0 , 5 \leq L / D \leq 30$ $h - 20 \leq L \leq h + 300$
wobei in der Formel (XIII) h (cm) die Länge der Führung darstellt.

10. Verfahren zur Herstellung des aromatischen verzweigten Polycarbonats nach einem der Ansprüche 5 bis 9, wobei
ein Raumvolumen V (m³), wo eine Flüssigkeit in der Flüssigkeitszufuhrzone ab der Flüssigkeitszuführöffnung bis zu einer oberen Fläche der porösen Platte vorhanden sein kann, und die obere Fläche T (m²) der porösen Platte, einschließlich oberer Flächen der Poren der porösen Platte, die folgende Formel (XIV) erfüllen: $0 , 02 \left(m\right) \leq V / T \leq 0,5 \left(m\right)$

11. Verfahren zur Herstellung des aromatischen verzweigten Polycarbonats nach einem der Ansprüche 5 bis 10, wobei
mindestens eine der Führungen in einer Säulenform mit einem Außendurchmesser r (cm) oder in einer Rohrform vorliegt, die eine Flüssigkeit und/oder eine gasförmige Substanz daran hindert, in das Innere einzutreten, wobei
der äußere Durchmesser r die folgende Formel (XV) erfüllt: $0 , 1 \leq r \leq 1$

12. Verfahren zur Herstellung des aromatischen verzweigten Polycarbonats nach einem der Ansprüche 5 bis 11, wobei
die Führungskontakt-Herabfließ-Polymerisationsvorrichtung die Vielzahl von Führungen aufweist, und
die Vielzahl von Führungen durch ein stützendes Material verbunden sind.

13. Verfahren zur Herstellung des aromatischen verzweigten Polycarbonats nach einem der Ansprüche 5 bis 12, wobei
eine Inertgasabsorptionsvorrichtung angeordnet ist, um zu ermöglichen, dass ein Inertgas an ein geschmolzenes aromatisches verzweigtes Polycarbonat-Prepolymer vor Zuführung zu der Führungskontakt-Herabfließ-Polymerisationsvorrichtung absorbiert wird, wobei
das geschmolzene Prepolymer mit absorbiertem Inertgas zu der Führungskontakt-Herabfließ-Polymerisationsvorrichtung so zugeführt wird, dass dessen Druck innerhalb einer Zufuhrleitung für geschmolzenes Prepolymer von der Inertgasabsorptionsvorrichtung bis zu der Führungskontakt-Herabfließ-Polymerisationsvorrichtung mittels eines Druckregelventils, das unmittelbar vor dem Eingang der Führungskontakt-Herabfließ-Polymerisationsvorrichtung angeordnet ist, bei 15 kPaA bis 200 kPaA gehalten wird.

14. Verfahren zur Herstellung des aromatischen verzweigten Polycarbonats nach Anspruch 13, wobei
eine weitere Führungskontakt-Herabfließ-Polymerisationsvorrichtung angeordnet ist, die mit der Führungskontakt-Herabfließ-Polymerisationsvorrichtung verbunden ist, und
eine Inertgasabsorptionsvorrichtung angeordnet ist, um zu ermöglichen, dass ein Inertgas an ein geschmolzenes aromatisches verzweigtes Polycarbonat-Prepolymer vor Zuführung zu jeder der Führungskontakt-Herabfließ-Polymerisationsvorrichtungen absorbiert wird, wobei
das geschmolzene Prepolymer mit absorbiertem Inertgas so zugeführt wird, dass dessen Druck innerhalb einer Zufuhrleitung für geschmolzenes Prepolymer von der Inertgasabsorptionsvorrichtung bis zu jeder der Führungskontakt-Herabfließ-Polymerisationsvorrichtungen mittels eines Druckregelventils, das unmittelbar vor dem Eingang jeder der Führungskontakt-Herabfließ-Polymerisationsvorrichtungen angeordnet ist, bei 15 kPaA bis 200 kPaA gehalten wird.

15. Herstellungsvorrichtung für aromatisches verzweigtes Polycarbonat, mit
einer Führungskontakt-Herabfließ-Polymerisationsvorrichtung, die es ermöglicht, dass ein aromatisches verzweigtes Polycarbonat-Prepolymer entlang einer äußeren Oberfläche einer Führung, die selbst keine Heizquelle aufweist, herabfließen kann, während eine niedrigsiedende Substanz verdampft wird, und
einer Inertgasabsorptionsvorrichtung, die es ermöglicht, dass ein Inertgas an ein geschmolzenes aromatisches verzweigtes Polycarbonat-Präpolymer vor Zuführung zu der Führungskontakt-Herabfließ-Polymerisationsvorrichtung absorbiert wird, wobei
die Führungskontakt-Herabfließ-Polymerisationsvorrichtung die folgende <Bedingung (1)> bis <Bedingung (9)> erfüllt, und
ein Druckregelventil zum Steuern eines Drucks des geschmolzenen Prepolymers mit absorbiertem Inertgas auf 15 kPaA bis 200 kPaA innerhalb einer geschmolzenen Prepolymer-Zufuhrleitung von der Inertgasabsorptionsvorrichtung bis zu der Führungskontakt-Herabfließ-Polymerisationsvorrichtung aufweist:
<Bedingung (1)>
sie weist auf: eine Flüssigkeitszuführöffnung; eine Flüssigkeitszufuhrzone zum Zuführen einer Flüssigkeit zu einer Führung einer Verdampfungszone durch eine poröse Platte; die Verdampfungszone, welche mit einer Vielzahl von Führungen versehen ist, die von der porösen Platte aus in einem Raum, der von der porösen Platte, einem seitlichen Gehäuse und einem Bodengehäuse umgeben ist, nach unten verlaufen; ein in der Verdampfungszone angeordnetes Vakuumventil; und eine Flüssigkeitsabgabeöffnung, die in einem untersten Teil des Bodengehäuses angeordnet ist;
<Bedingung (2)>
ein Fließwegsteuerbauteil mit einer Funktion, dass eine Flüssigkeit, die von der Flüssigkeitszuführöffnung zu der porösen Platte zugeführt werden soll, in einer Richtung von einem peripheren Teil der porösen Platte zu einem zentralen Teil in der Flüssigkeitszufuhrzone fließt, ist in der Flüssigkeitszufuhrzone angeordnet;
<Bedingung (3)>
die Innenquerschnittsfläche A (m²) auf einer horizontalen Ebene des seitlichen Gehäuses der Verdampfungszone erfüllt die folgende Formel (I): $0 , 7 \leq A \leq 300$
<Bedingung (4)>
ein Verhältnis zwischen der Innenquerschnittsfläche A (m²) und einer Innenquerschnittsfläche B (m²) auf einer horizontalen Ebene der Flüssigkeitsabgabeöffnung erfüllt die folgende Formel (II): $20 \leq A / B \leq 1000$
<Bedingung (5)>
das Bodengehäuse, welches ein Bestandteil des Bodens der Verdampfungszone ist, ist mit dem oberen seitlichen Gehäuse in einem Winkel von C Grad (°) in Bezug zu dessen Innenseite verbunden, wobei der Winkel von C Grad die folgende Formel (III) erfüllt: $110 \leq C \leq 165$
<Bedingung (6)>
die Länge h (cm) der Führung erfüllt die Formel (IV): $150 \leq h \leq 5000$
<Bedingung (7)>
der gesamte Außenoberflächenbereich S (m²) aller der Vielzahl von Führungen erfüllt die Formel (V): $2 \leq S \leq 50000$
<Bedingung (8)>
die mittlere Anzahl N von Poren pro m² der porösen Platte (Anzahl/m²) erfüllt die Formel (VI): $50 \leq N \leq 3000$
<Bedingung (9)>
ein Verhältnis zwischen der oberen Fläche T (m²) der porösen Platte einschließlich oberer Flächen der Poren der porösen Platte, und der gesamten effektiven Querschnittsfläche Q (m²) der Poren erfüllt die folgende Formel (VII): $50 \leq T / Q \leq 3000$

## Revendications

1. Polycarbonate aromatique ramifié qui satisfait aux <conditions (i)> à <conditions (iii)> suivantes :
<condition (i)>
comportant un motif répétitif représenté par la formule générale (1) suivante dans une chaîne principale et une chaîne ramifiée, et
comportant un ou plusieurs types de structures ramifiées représentées par les formules générales (2), (3), et (4) suivantes dans la chaîne principale et la chaîne ramifiée, dans lequel
le rapport entre la quantité totale de substance des structures ramifiées et la quantité de substance de l'unité répétitive représentée par la formule générale (1) ci-dessous,
déterminé comme décrit dans la description, est compris entre 0,01 % en moles et 0,5 % en moles : 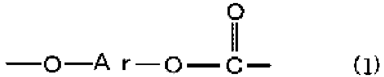 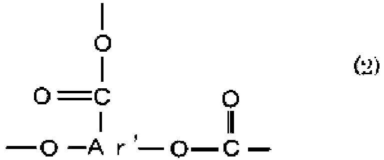 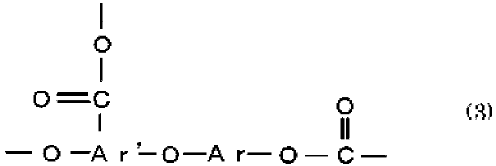 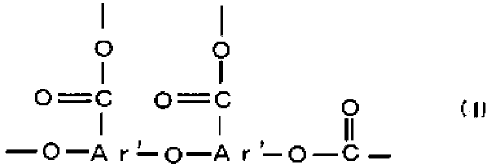
Dans lequel Ar représente un groupe aromatique divalent, et Ar' représente un groupe aromatique trivalent ;
<condition (ii)>
contenant un ou plusieurs types d'oligomères représentés par les formules générales (5), (6), et (7) suivantes, dans lesquelles le rapport entre la masse totale des oligomères et la masse du polycarbonate ramifié aromatique, déterminé comme décrit dans la description, est de 0,6% en masse ou moins :
H-(O-Ar-O-C(=O)-)₂-OAr" (5)
H-(O-Ar-O-C(=O)-)₂-O-Ar-OH (6)
ArO-C(=O)-(O-Ar-O-C(=O)-)₂-CAr" (7)
Dans lequel Ar représente un groupe aromatique divalent, et Ar" représente un groupe terminal aromatique ; et
<condition (iii)>
le rapport entre la quantité totale de substance des oligomères représentés par les formules générales (5) et (6) et la quantité totale de substance des oligomères, déterminé comme décrit dans la description, est de 60 % en moles ou moins.

2. Polycarbonate ramifié aromatique selon la revendication 1, dans lequel
dans la <condition (i)>, le rapport entre la quantité totale de substance des structures ramifiées et la quantité de substance de l'unité répétitive représentée par la formule générale (1) est compris entre 0,05 % en moles et 0,4 % en moles,
dans la <condition (ii)>, le rapport entre la masse totale des oligomères et la masse du polycarbonate aromatique ramifié est inférieur ou égal à 0,3 % en masse, et
dans la <condition (iii)>, le rapport entre la quantité totale de substance des oligomères représentés par les formules générales (5) et (6) et la quantité totale de substance des oligomères est inférieur ou égal à 30 % en moles.

3. Polycarbonate ramifié aromatique selon la revendication 1 ou 2, dans lequel l'indice de fluidité à chaud (MI) du polycarbonate ramifié aromatique, mesuré à une température de 300 °C sous une charge de 1,2 kg, est compris entre 0,5 et 40 g/10 min.

4. Procédé de fabrication du polycarbonate ramifié aromatique selon l'une quelconque des revendications 1 à 3, comprenant les étapes consistant à :
Introduire un prépolymère de polycarbonate ramifié aromatique ayant absorbé de l'azote dans un appareil de polymérisation de type à écoulement descendant et à contact guidé, constituant un appareil de fabrication de polycarbonate ramifié aromatique, de telle sorte que la pression de celui-ci soit maintenue entre 15 kPaA et 200 kPaA ; et
laisser le prépolymère s'écouler le long d'une surface externe d'un guide ne comportant aucune source de chauffage en soi afin d'évaporer une substance à bas point d'ébullition.

5. Procédé de fabrication du polycarbonate ramifié aromatique selon la revendication 4, dans lequel
l'évaporation de la substance à bas point d'ébullition est réalisée à l'aide d'un appareil de polymérisation de type à écoulement descendant et à contact guidé, et
l' appareil de polymérisation de type à écoulement descendant et à contact guidé satisfait aux <condition (1)> à <condition (9)> suivantes :
<condition (1)>
comprenant : un orifice d'alimentation en liquide ; une zone d'alimentation en liquide destinée à fournir un liquide à un guide d'une zone d'évaporation à travers une plaque poreuse ; la zone d'évaporation étant pourvue d'une pluralité de guides s'étendant vers le bas à partir de la plaque poreuse dans un espace entouré par la plaque poreuse, un boîtier latéral et un boîtier inférieur ; un évent de mise sous vide disposé dans la zone d'évaporation ; et un orifice d'évacuation de liquide disposé dans la partie la plus basse du boîtier inférieur ;
<condition (2)>
un composant de contrôle du trajet d'écoulement, dont la fonction est de faire en sorte que le liquide devant être acheminé depuis l'orifice d'alimentation en liquide vers la plaque poreuse s'écoule dans une direction allant d'une partie périphérique de la plaque poreuse vers une partie centrale de la zone d'alimentation en liquide, est placé dans la zone d'alimentation en liquide ;
<condition (3)>
la section transversale interne A (m²) sur un plan horizontal du boîtier latéral de la zone d'évaporation satisfait à la formule (I) suivante : $0 , 7 \leq A \leq 300$
<condition (4)>
le rapport entre la section transversale interne A (m²) et la section transversale interne B (m²) sur un plan horizontal de l'orifice de décharge du liquide satisfait à la formule (II) suivante : $20 \leq A / B \leq 1 000$
<condition (5)>
le boitier inférieur constituant le fond de la zone d'évaporation est relié au boîtier supérieur selon
un angle de C degrés (°) par rapport à l'intérieur de celui-ci, l'angle de C degrés satisfaisant à la formule (III) suivante : $110 \leq C \leq 165$
<condition (6)>
la longueur h (cm) du guide satisfait à la formule (IV) : $150 \leq h \leq 5 000$
<condition (7)>
la surface externe totale S (m²) de l'ensemble de la pluralité de guides satisfait à la formule (V) : $2 \leq S \leq 50 000$
<condition (8)>
le nombre moyen N de pores par m² de la plaque poreuse (nombre/m²) satisfait à la formule (VI) : $50 \leq N \leq 3 000 ,$ et
<condition (9)>
le rapport entre la surface supérieure T (m²) de la plaque poreuse, y compris les surfaces supérieures des pores de la plaque poreuse, et la section transversale effective totale Q (m²) des pores satisfait à la formule (VII) suivante : $50 \leq T / Q \leq 3 000$

6. Procédé de fabrication du polycarbonate aromatique ramifié selon la revendication 4 ou 5, dans lequel la quantité de liquide soumise au traitement d'évaporation est d'au moins 1 tonne par heure.

7. Procédé de fabrication du polycarbonate aromatique ramifié selon la revendication 5 ou 6, dans lequel
l'angle E en degrés (°) formé par une face de paroi latérale interne de la zone d'alimentation en liquide et la plaque poreuse satisfait à la formule (VIII) suivante : $100 \leq E < 180$

8. Procédé de fabrication du polycarbonate aromatique ramifié selon l'une quelconque des revendications 5 à 7, dans lequel
la distance K (cm) entre le guide le plus proche d'une face de paroi interne du boîtier latéral de la zone d'évaporation et la face de paroi interne satisfait à la formule (IX) suivante : $5 \leq K \leq 50$

9. Procédé de fabrication du polycarbonate aromatique ramifié selon l'une quelconque des revendications 5 à 8, dans lequel
Le boîtier latéral de la zone d'évaporation présente une forme cylindrique avec un diamètre intérieur D (cm) et une longueur L (cm), le boîtier inférieur relié à une partie inférieure du boîtier latéral présente une forme conique, et l'orifice d'évacuation du liquide situé à la partie la plus basse du boîtier inférieur de forme conique présente une forme cylindrique avec un diamètre intérieur d (cm), dans laquelle D, L et d satisfont aux formules (X), (XI), (XII) et (XIII) suivantes : 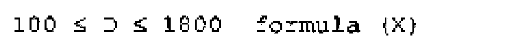 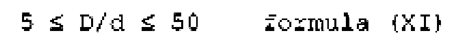 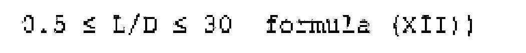 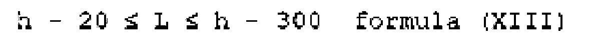 où, dans la formule (XIII), h (cm) représente la longueur du guide.

10. Procédé de fabrication du polycarbonate aromatique ramifié selon l'une quelconque des revendications 5 à 9, dans lequel
le volume V (m³) de l'espace dans lequel un liquide peut exister dans la zone d'alimentation en liquide, depuis l'orifice d'alimentation en liquide jusqu'à la face supérieure de la plaque poreuse, et la surface supérieure T (m²) de la plaque poreuse, comprenant les surfaces supérieures des pores de la plaque poreuse, satisfont à la formule (XIV) suivante : $0 , 02 \left(m\right) \leq V / T \leq 0 , 5 \left(m\right)$

11. Procédé de fabrication du polycarbonate aromatique ramifié selon l'une quelconque des revendications 5 à 10, dans lequel
au moins l'un des guides se présente sous une forme colonnaire de diamètre extérieur r (cm), ou sous une forme tubulaire empêchant une substance liquide et/ou gazeuse de pénétrer à l'intérieur, dans laquelle
le diamètre extérieur r satisfait à la formule (XV) suivante : $0 , 1 \leq r \leq 1$

12. Procédé de fabrication du polycarbonate aromatique ramifié selon l'une quelconque des revendications 5 à 11, dans lequel
l'appareil de polymérisation de type à écoulement descendant et à contact guidé comporte une pluralité de guides, et lesdits plusieurs guides sont reliés par un matériau de support.

13. Procédé de fabrication du polycarbonate aromatique ramifié selon l'une quelconque des revendications 5 à 12, dans lequel
un appareil d'absorption de gaz inerte, permettant à un gaz inerte d'être absorbé par un prépolymère de polycarbonate aromatique ramifié fondu avant son acheminement vers l'appareil de polymérisation de type à écoulement descendant et à contact guidé, est mis en place, dans lequel
le prépolymère fondu ayant absorbé du gaz inerte est acheminé vers l'appareil de polymérisation de type à écoulement descendant et à contact guidé de telle sorte que sa pression à l'intérieur d'une canalisation d'alimentation en prépolymère fondu, allant de l'appareil d'absorption de gaz inerte à l'appareil de polymérisation de type à écoulement descendant et à contact guidé, soit maintenue entre 15 kPaA et 200 kPaA par une vanne de régulation de pression placée immédiatement en amont de l'entrée de l'appareil de polymérisation de type à écoulement descendant et à contact guidé.

14. Procédé de fabrication du polycarbonate aromatique ramifié selon la revendication 13, dans lequel
un appareil de polymérisation de type à écoulement descendant et à contact guidé est en outre raccordé à l'appareil de polymérisation de type à écoulement descendant et à contact guidé, et
un appareil d'absorption de gaz inerte qui permet l'absorption d'un gaz inerte par un prépolymère de polycarbonate aromatique ramifié fondu avant son acheminement vers chacun des appareils de polymérisation de type à écoulement descendant et à contact guidé, est mis en place, dans lequel
le prépolymère fondu ayant absorbé du gaz inerte est acheminé de telle sorte que sa pression à l'intérieur d'une canalisation d'alimentation en prépolymère fondu, allant de l'appareil d'absorption de gaz inerte à chacun des appareils de polymérisation de type à écoulement descendant et à contact guidé, soit maintenue entre 15 kPaA et 200 kPaA par une vanne de régulation de pression placée immédiatement en amont de l'entrée de chacun des appareils de polymérisation de type à écoulement descendant et à contact guidé.

15. Appareil de fabrication de polycarbonate ramifié aromatique comprenant
un appareil de polymérisation de type à écoulement descendant et à contact guidé qui permet à un prépolymère de polycarbonate ramifié aromatique de s'écouler le long d'une surface externe d'un guide ne comportant aucune source de chauffage en soi, tout en évaporant une substance à bas point d'ébullition, et
un appareil d'absorption de gaz inerte destiné à permettre l'absorption d'un gaz inerte par un prépolymère de polycarbonate ramifié aromatique fondu avant son acheminement vers l'appareil de polymérisation de type à écoulement descendant et à contact guidé, dans lequel
l'appareil de polymérisation de type à écoulement descendant à contact guidé satisfait aux <condition (1)> à <condition (9)> suivantes, et
comporte une vanne de régulation de pression destinée à réguler la pression du prépolymère fondu ayant absorbé le gaz inerte entre 15 kPaA et 200 kPaA à l'intérieur d'une canalisation d'alimentation en prépolymère fondu reliant l'appareil d'absorption de gaz inerte à l'appareil de polymérisation de type à écoulement et à contact guidé :
<condition (1)>
comprenant : un orifice d'alimentation en liquide ; une zone d'alimentation en liquide destinée à fournir un liquide à un guide d'une zone d'évaporation à travers une plaque poreuse ; la zone d'évaporation étant pourvue d'une pluralité de guides s'étendant vers le bas à partir de la plaque poreuse dans un espace entouré par la plaque poreuse, un boîtier latéral et un boîtier inférieur ; un évent de mise sous vide disposé dans la zone d'évaporation ; et un orifice d'évacuation de liquide disposé dans une partie la plus basse du boîtier inférieur ;
<condition (2)>
un composant de contrôle du trajet d'écoulement, doté d'une fonction grâce à laquelle un liquide devant être acheminé depuis l'orifice d'alimentation en liquide vers la plaque poreuse s'écoule dans une direction allant d'une partie périphérique de la plaque poreuse vers une partie centrale de celle-ci dans la zone d'alimentation en liquide, est placé dans la zone d'alimentation en liquide ;
<condition (3)>
la section transversale interne A (m²) sur un plan horizontal du boîtier latéral de la zone d'évaporation satisfait à la formule (I) suivante : $0 , 1 \leq A \leq 300$
<condition (4)>
le rapport entre la section transversale interne A (m²) et la section transversale interne B (m²) sur un plan horizontal de l'orifice d'évacuation du liquide satisfait à la formule (II) suivante : $20 \leq A / B \leq 1 000$
<condition (5)>
Le boîtier inférieur constituant le fond de la zone d'évaporation est relié au boîtier supérieur au niveau d'un angle de C degrés (°) par rapport à l'intérieur de celui-ci, l'angle de C degrés satisfaisant à la formule (III) suivante : $110 \leq C \leq 165$
<condition (6)>
la longueur h (cm) du guide satisfait à la formule (IV) suivante : $150 \leq h \leq 5000$
<condition (7)>;
la surface externe totale S (m²) de l'ensemble des guides satisfait à la formule (V) suivante : $2 \leq S \leq 50 000$
<condition (8)>
le nombre moyen N de pores par m² de la plaque poreuse (nombre/m²) satisfait à la formule (VI) suivante : $50 \leq N \leq 3 000$ et
<condition (9)>
le rapport entre la surface supérieure T (m²) de la plaque poreuse, comprenant les surfaces supérieures des pores de la plaque poreuse, et la section transversale effective totale Q (m²) des pores satisfait à la formule (VII) suivante : $50 \leq T / Q \leq 3 000$
